# EUROPEAN PATENT APPLICATION

(11) **EP 4 793 667 A1**
(43) Date of publication of application: **19.08.2026**
(21) Application number: 25158224.3
(22) Date of filing: 17.02.2025
(51) Int. Cl.: G01S 19/04, G01S 19/07

(54) **NAVIGATION SATELLITE SYSTEM (NSS)-BASED POSITIONING METHODS AND SYSTEMS RELYING ON OBSERVATIONS FROM A PLURALITY OF REFERENCE STATIONS**

(71) Applicant: Trimble Inc, Westminster CO 80021 (US)
(72) Inventor: Talbot, Nicholas Charles, Ashburton, Victoria, 3147 (AU); Chen, Xiaoming, Hoehenkirchen-Siegertsbrunn (DE); Mittal, Vishu, Hoehenkirchen-Siegertsbrunn (DE)
(74) Representative: Hoffmann Eitle

(57) **Abstract**

Some embodiments of the invention pertain to generating and transmitting information suitable for use in contributing to computing a positioning solution based on navigation satellite system (NSS) signals received by a NSS receiver, to minimize multipath and atmospheric errors in the resulting positioning solution so as to increase its accuracy. The method involves a plurality of reference stations 100, 200 comprising a primary reference station 100 and at least one secondary reference station 200. Systems and computer programs are also disclosed.

## Description

### [Field of technology]

The invention relates to methods, systems, and computer programs for generating and transmitting information usable in the context of positioning methods and systems relying on navigation satellite systems (NSS) signals. The fields of application of the methods, systems, and computer programs include, but are not limited to, geospatial positioning, navigation, highly automated driving, autonomous driving, mapmaking, land surveying, civil engineering, earth moving, construction, agriculture, disaster prevention and relief, and scientific research.

### [Background]

Navigation satellite systems (NSS) include both global navigation satellite systems (GNSS) and regional navigation satellite systems (RNSS), such as the Global Positioning System (GPS) (United States), GLONASS (Russia), Galileo (Europe), BDS (China), QZSS (Japan), the Indian Regional Navigational Satellite System (IRNSS, also referred to as NAVIC) (systems in use or in development), and are also intended to be inclusive of MEO-PNT and LEO-PNT navigation satellite systems. An NSS typically uses a plurality of satellites orbiting the Earth. The plurality of satellites forms a constellation of satellites. An NSS receiver detects a code modulated on an electromagnetic signal broadcast by a satellite. The code is also called a ranging code. Code detection includes comparing the bit sequence modulated on the broadcasted signal with a receiver-side version of the code to be detected. Based on the detection of the time of arrival of the code for each of a series of the satellites, the NSS receiver estimates its position. Positioning includes, but is not limited to, geolocation, i.e. the positioning on the surface of the Earth.

An overview of GPS, GLONASS, and Galileo is provided for example in sections 9, 10, and 11 of ref. [1] (a list of references is provided at the end of the present description, after a list of abbreviations and acronyms).

Positioning using NSS signal codes provides a limited accuracy, notably due to the distortion the code is subject to upon transmission through the atmosphere. For instance, the GPS includes the transmission of a coarse/acquisition (C/A) code modulated on a carrier signal at about 1575 MHz, the so-called L1 frequency. This code is freely available to the public, whereas the Precise (P) code is reserved for military applications. The accuracy of code-based positioning using the GPS C/A code is approximately 15 meters, when considering both the electronic uncertainty associated with the detection of the C/A code (electronic detection of the time of arrival of the pseudorandom code) and other errors including those caused by ionospheric and tropospheric effects, ephemeris errors, satellite clock errors, and multipath propagation.

The carrier signals transmitted by the NSS satellites can also be tracked to provide an alternative, or complementary way of determining the range, or change in range between the NSS receiver and satellite. Carrier phase measurements from multiple NSS satellites facilitate estimation of the position of the NSS receiver.

The approach based on carrier phase measurements has the potential to provide much greater position precision, i.e. down to centimetre-level or even millimetre-level precision, compared to the code-based approach. The reason may be intuitively understood as follows. The code, such as the GPS C/A code on the L1 band, has an effective chip length that is much longer than one cycle of the carrier on which the code is modulated. Code and carrier phase measurements have precisions that are roughly the same fraction of the respective chip length or wavelength. The position resolution may therefore be viewed as greater for carrier phase detection than for code detection.

However, in the process of estimating the position based on carrier phase measurements, the carrier phases are ambiguous by an unknown number of cycles. The fractional phase of a received signal can be determined but the additional number of cycles required to determine the satellite's range cannot be directly determined in an unambiguous manner. This is the so-called "integer ambiguity problem", "integer ambiguity resolution problem", or "phase ambiguity resolution problem", which may be solved to yield the so-called fixed-ambiguity solution, sometimes referred to simply as the fixed solution.

GNSS observation equations for code observations and for carrier phase observations are for example provided in ref. [1], section 5. An introduction to the GNSS integer ambiguity resolution problem, and its conventional solutions, is provided in ref. [1], section 7.2. The same or similar principles apply to RNSS.

GNSS observables therefore include the carrier phase and code (pseudorange), the former being generally much more precise than the latter, but ambiguous. These observables enable a user to obtain the geometric distance from the receiver to the satellite. With known satellite position and satellite clock error, the receiver position and receiver clock error can be estimated.

As mentioned above, the GPS includes the transmission of a C/A code using a carrier signal at about 1575 MHz, the so-called L1 frequency. More precisely, each GPS satellite transmits continuously using two radio frequencies in the L-band, referred to as L1 and L2, at respective frequencies of 1575.42 MHz and 1227.60 MHz. With the ongoing modernization of the GPS, signals on a third frequency, known as L5, are becoming available. Among the two signals transmitted on L1, one is for civil users and the other is for users authorized by the United States Department of Defense (DoD). Signals are also transmitted on L2, for civil users and DoD-authorized users. Each GPS signal at the L1 and L2 frequencies is modulated with a pseudo-random noise (PRN) code, and optionally with satellite navigation data. When GNSS satellites broadcast signals that do not contain navigation data, these signals are sometimes termed "pilot" signals, or "data-free" signals. In relation to GPS, two different PRN codes are transmitted by each satellite: a C/A code and a P code which is encrypted for DoD-authorized users to become a Y code. Each C/A code is a unique sequence of 1023 bits, which is repeated each millisecond. Other NSS also have satellites transmitting multiple signals on multiple carrier frequencies.

There is a constant need for improving positioning or similar systems relying on NSS observables, in particular in terms of precision and accuracy of the resulting positioning solutions.

### [Summary]

The present invention aims at addressing the above-mentioned need. The invention includes methods, systems, computer programs, computer program products, and storage mediums as defined in the independent claims. Particular embodiments are defined in the dependent claims.

In one embodiment, a method aims at generating information suitable for use by (i) a NSS receiver and/or (ii) a processing entity capable of receiving data from the NSS receiver, in contributing to computing a positioning solution based on NSS signals received by the NSS receiver. The method involves a plurality of reference stations comprising: (a) a first reference station, hereinafter referred to as "primary reference station", and (b) at least one further reference station, each further reference station being hereinafter referred to as "secondary reference station". The method comprises, for each secondary reference station: (1) forming single-differenced observations based on carrier-phase observations made by the primary reference station and carrier-phase observations made by the secondary reference station; (2) estimating a position of the secondary reference station relative to a position of the primary reference station based on the single-differenced observations; (3) resolving carrier-phase ambiguities based on the single-differenced observations; and (4) estimating a residual, hereinafter referred to as "single-differenced network residual", per carrier-phase observation to each satellite and on each frequency, for the primary reference station to the secondary reference station pair, based on the estimated position of the secondary reference station and the resolved carrier-phase ambiguities. The method further comprises generating a residual, hereinafter referred to as "undifferenced network residual", per satellite and frequency, for accounting for errors affecting observations at the plurality of reference stations, based on the estimated single-differenced network residuals. The method also comprises at least one of: (i) sending, to one device or to a plurality of devices, carrier-phase observations made by the primary reference station, corrected using the undifferenced network residuals; and (ii) sending, to one device or to a plurality of devices, translated carrier-phase observations, the translated carrier-phase observations being based on carrier-phase observations made by the primary reference station, corrected using the undifferenced network residuals, and also translated to a virtual reference station location.

The method aims at allowing the generation of information suitable for use in contributing to computing a positioning solution based on NSS signals received by a NSS receiver, while minimizing multipath and atmospheric errors in the resulting positioning solution so as to increase its accuracy.

In one embodiment, a system is configured for carrying out the operations of the above-described method.

In some embodiments, computer programs, computer program products, and storage media for storing such computer programs are provided. Such computer programs comprise computer- and/or machine-executable instructions configured for carrying out, when executed on a computer and/or a machine such as one embedded in, or otherwise part of, a reference station, a NSS receiver, or in another apparatus such as a processing entity capable of receiving data from the NSS receiver, or when executed on a set of computers and/or a set of machines such as a set of computers and/or machines embedded in, or otherwise part of, a plurality of reference stations or a plurality of apparatuses or devices, the operations of the above-described method.

### [Brief description of the drawings]

Embodiments of the present invention shall now be described in conjunction with the appended drawings in which:
Fig. 1 is a schematic diagram of a method in one embodiment of the invention;
Fig. 2a is a flowchart of a method in one embodiment of the invention, which includes sending corrected carrier-phase observations;
Fig. 2b is a flowchart of a method in one embodiment of the invention, which includes sending translated carrier-phase observations;
Fig. 2c is a flowchart of a method in one embodiment of the invention, which includes sending both corrected carrier-phase observations and translated carrier-phase observations;
Fig. 3a is a flowchart of a method in one embodiment of the invention, which includes sending a spatial atmospheric error parameter set;
Fig. 3b is a flowchart of a method in one embodiment of the invention, which further includes sending information about precision of parameters of a spatial atmospheric error parameter set;
Fig. 4 is a flowchart of a method in one embodiment of the invention, which includes transmitting, from the primary reference station to each secondary reference station, the raw carrier-phase observations, and optionally raw code observations, made by the primary reference station;
Fig. 5a is a flowchart of a method in one embodiment of the invention, which includes transmitting, from each secondary reference station to the primary reference station, carrier-phase observations made by the secondary reference station, resolved carrier-phase ambiguities, and an estimated position of the secondary reference station;
Fig. 5b is a flowchart of a method in one embodiment of the invention, which includes transmitting, from each secondary reference station to the primary reference station, (i) carrier-phase observations made by the secondary reference station and adjusted for resolved carrier-phase ambiguities, and (ii) an estimated position of the secondary reference station;
Fig. 6 is a flowchart of a method in one embodiment of the invention, which includes transmitting, from each secondary reference station to the primary reference station, single-differenced network residuals;
Figs. 7a to 7c are flowcharts of methods in embodiments of the invention, which include sending, for each of at least one of the plurality of reference stations, a quality indicator representing a measure of quality of a tracking environment of the reference station;
Fig. 8 is a flowchart of a method in one embodiment of the invention, which includes detecting that a secondary reference station has been moved;
Fig. 9 is a flowchart of a method in one embodiment of the invention, which includes sending information regarding the number of reference stations used for generating undifferenced network residuals;
Fig. 10 is a flowchart of a method in one embodiment of the invention, which includes transferring, from one reference station to another reference station, the function of primary reference station;
Fig. 11 is a flowchart of a method in one embodiment of the invention, which includes determining that primary reference station raw carrier-phase observations are available at the primary reference station for which no corresponding observations are available at a secondary reference station;
Fig. 12 is a flowchart of a method in one embodiment of the invention, which further includes operations carried out by at least one of: a NSS receiver, and a processing entity capable of receiving data from a NSS receiver;
Fig. 13 is a flowchart of a method in one embodiment of the invention, which further includes receiving a spatial atmospheric error parameter set for modelling tropospheric and, optionally, ionospheric errors;
Fig. 14 is a schematic diagram of a map view of a portion of a GNSS tracking network;
Fig. 15 shows the isolation of atmospheric and multipath errors in single-differenced carrier phase observations;
Fig. 16 shows the relationship between satellite elevation ("Sat Elev") angle and the Earth distance ("Earth Dist") to the tropospheric pierce point at an altitude of 6 km;
Fig. 17 is a schematic diagram of a system in one embodiment of the invention, the diagram representing tropospheric model, ionospheric model, and multipath estimation for a multi-reference station network;
Fig. 18 schematically illustrates a system in one embodiment of the invention; and
Figs. 19a to 19d show experimental data illustrating improvements gained at a rover by adding secondary reference stations to a primary reference network processing.

### [Detailed description]

The present invention shall now be described in conjunction with specific embodiments. These serve to provide the skilled person with a better understanding but are not intended to in any way restrict the scope of the invention, which is defined by the appended claims. In particular, the embodiments described throughout the description can be combined to form further embodiments to the extent that these further embodiments are not mutually exclusive.

Throughout the following description, the abbreviation "GNSS" is sometimes used. The invention is, however, not limited to global navigation satellite systems (GNSS) but also applies to regional navigation satellite systems (RNSS). Thus, it is to be understood that each occurrence of "GNSS" in the following can be replaced with "RNSS" to form additional embodiments. In addition, as mentioned above in the "Background" section, the term "NSS" is here intended to cover different types of embodiments, and those may also include embodiments involving MEO-PNT and/or LEO-PNT navigation satellite systems.

In the art, the term "observables" is often used to refer to structures of an NSS signal from which observations or measurements can be made (PRN-code, carrier phase, Doppler, SNR) (see e.g. ref. [3]: "The word *observable* is used throughout GPS literature to indicate the signals whose measurement yields the range or distance between the satellite and the receiver."). However, in common usage, and in the present document, the term "observable" (also referred to as "NSS observable") is also interchangeably used to refer to the observation itself, such that, for example, "code observable" has the same meaning as "code observation", and "carrier phase observable" has the same meaning as "carrier phase observation". Further, when the present document describes that an NSS signal is observed, this means that at least one observation (measurement) of at least one observable of the NSS signal is made.

When the term "real-time" is used in the present document, it means that an action is performed (e.g., data is received, processed, or transmitted, results are computed) as soon as the required information for that action is available. Thus, certain latency exists, which depends on various aspects depending on the involved component(s) of the system.

When the verb "broadcast" (and "broadcasting", etc.) is used, this also covers embodiments where the transmission is a form of multicasting.

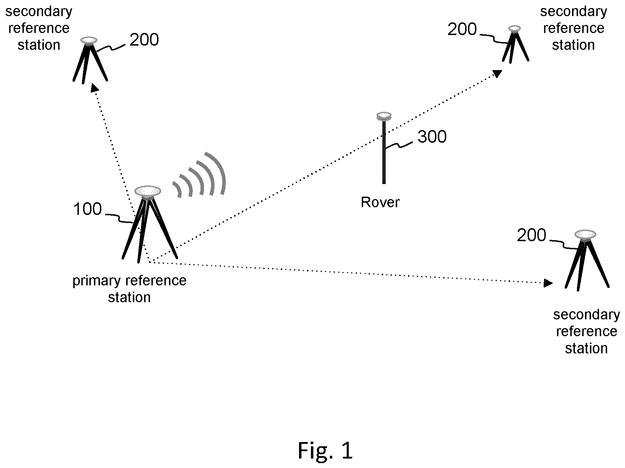

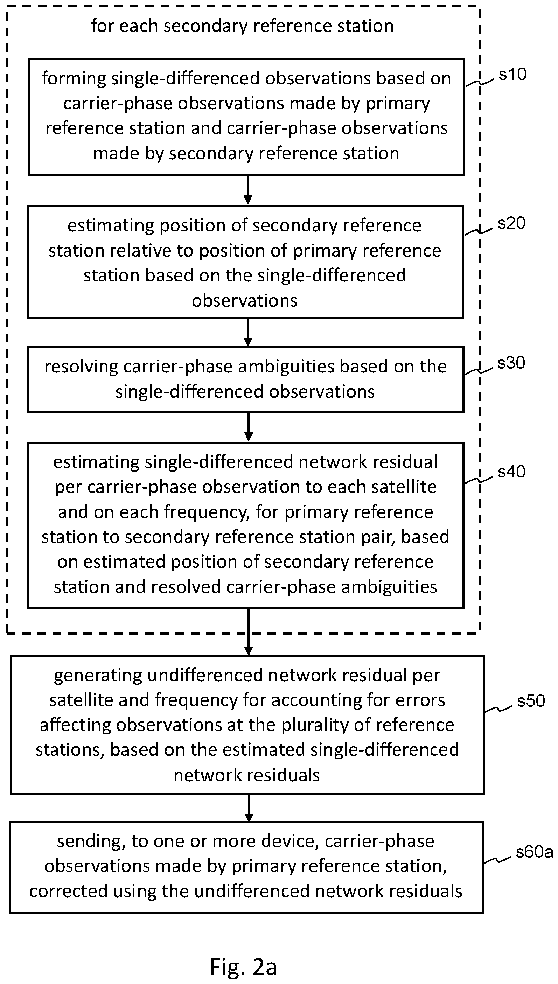

Fig. 1 is a schematic diagram of a method in one embodiment of the invention, which will be described below also with reference to Fig. 2a.

The method's aim is to generate information suitable for use by a NSS receiver 300, and/or a processing entity capable of receiving data from NSS receiver 300, in contributing to computing a positioning solution based on NSS signals received by NSS receiver 300. NSS receiver 300 may be an electronic device configured for receiving, i.e. observing, signals from a plurality of NSS satellites over multiple epochs and processing them, for example in order to determine the NSS receiver's position. In Fig. 1, NSS receiver 300 is labelled and schematically illustrated as being a rover, which is a type of NSS receiver used, for example, in surveying and construction applications. A user, such as a surveyor or operator, may for example carry the rover or NSS receiver 300 around a surveyed area or a construction site for positioning purposes. Alternatively, the rover or NSS receiver 300 may be mounted or otherwise attached to a vehicle (not illustrated in Fig. 1), such as, but without being limited to, a bulldozer, an excavator, a grader, a paver (e.g., an asphalt or concrete paver), a roller, or a milling machine (for road resurfacing, i.e. to remove the top layer of an existing road surface). For example, a grader is used for grading, which is the process of reshaping land to a desired topography; and a paver is used for paving, which is the process of laying the final road surface, such as with asphalt. For graders, the antenna of a NSS receiver 300 may for example be mounted on top of the grader's blade.

The method involves a plurality of reference stations (also sometimes called "base receivers" or "base stations") comprising (a) a first reference station 100, here referred to as "primary reference station" 100, and (b) at least one further reference station 200, each further reference station 200 being here referred to as "secondary reference station" 200. The position of primary reference station 100 is known. If the position of primary reference station 100 is not known in advance of performing the method, the position should be estimated prior to using the reference station as primary reference station. The process of estimating the position of primary reference station 100 may for example take about 10 to 20 minutes, which may be the convergence time of the carrier-phase-based positioning solution. Estimating the coordinates of primary reference station 100 may for example be carried out using a fixed reference station (not illustrated in Fig. 1). Reference stations 100, 200 should preferably be placed in low-multipath environments.

In Fig. 1, as an example, primary reference station 100 is schematically illustrated together with three secondary reference stations 200. In one embodiment, the method involves n secondary reference stations 200, wherein n is an integer selected within the range from 1 to 15, preferably within the range from 1 to 7, more preferably within the range from 1 to 3 (i.e., *n* is more preferably equal to 1, 2, or 3).

It has been found that, in some embodiments, the benefit in terms of positioning error reduction (due to atmospheric and carrier phase multipath errors) of using *n*+*1* reference stations, i.e. primary reference station 100 and *n* secondary reference station(s), approximately follows the law of propagation of variances and the formula: $\frac{1}{\sqrt{n + 1}}$ As a result, the incremental benefit decreases as n becomes larger and larger. The minimum number of reference stations is 2 (*n* = 1, so that *n+1* = 2). Although there is not necessarily any maximum number of reference stations, having a relatively larger number of reference stations, such as 16 reference stations (*n* = 15, so that *n+1 =* 16), increases the complexity and cost of the system for a marginal benefit in terms of positioning error reduction, so that, in some embodiments, taking from 2 to 4 reference stations (i.e., *n* being thus equal to 1, 2, or 3) may be a good trade-off.

In one embodiment, each reference station 100, 200 is distant from its closest neighbour by a distance within the range from 5 cm to 4 km, preferably within the range from 10 cm to 2 km. In one embodiment, the number *n* of secondary reference stations 200 is within the range from 1 to 3, i.e. *n* is equal to 1, 2, or 3, and each reference station 100, 200 is distant from its closest neighbour by a distance within the range from 10 cm to 2 km.

The method comprises the operations labelled here for the sake of convenience as s10, s20, s30, s40, s50, and s60a, as schematically illustrated in the flowchart of Fig. 2a. Specifically, operations s10, s20, s30, and s40 are performed for each secondary reference station 200, as schematically illustrated by the surrounding dashed rectangle in Fig. 2a. That is, if for example the method involves three secondary reference stations, three occurrences of operation s10 are performed with each occurrence being associated with a specific secondary reference station 200, three respective occurrences of operation s20 are performed with each occurrence being associated with a specific secondary reference station 200, etc.

The method illustrated in Fig. 2a may be carried out by one or a plurality of computers and/or servers, or more generally by any number of processing entities implemented in hardware, firmware, software, and/or using any form of machine-readable instructions. The method may, but need not necessarily, be carried out by processing entities integrated in a primary reference station 100 and/or in a secondary reference station 200. One reference station 100, 200 may act as central processing entity or, instead, the operations may be configured to be carried out in a distributed manner across some of, or all of, reference stations 100, 200. The latter option is generally advantageous to reduce latency in the processing. Yet in another embodiment, the network of reference stations 100, 200 may be communicably connected to a central processing entity, such as a central processing server. In other words, the processing entity or entities configured for carrying out the method (as referred to above) is (or are) hosted in one of the reference stations 100, 200 or, alternatively, the processing entity or entities configured for carrying out the method is (or are) communicably connected to reference stations 100, 200.

In operation s10, single-differenced observations are formed based on carrier-phase observations made by primary reference station 100, i.e. raw carrier-phase observations made by primary reference station 100, and carrier-phase observations made by the secondary reference station 200 under consideration, i.e. raw carrier-phase observations made by the secondary reference station 200 under consideration. In this respect, see for example equation (3) in section 3.1 below. Operation s10's aim is to cancel the impact of the atmosphere on the observations. This is particularly effective, although the invention is not necessarily limited thereto, in embodiments in which primary reference station 100 and secondary reference station 200 are separated by 4 km or less, because atmospheric errors tend to be correlated in such settings.

In operation s20, the position of the secondary reference station 200 under consideration relative to a position of primary reference station 100 is estimated based on the single-differenced observations (outputted by operation s10). In this respect, relative GNSS positioning is known for example from ref. [16].

In operation s30, carrier-phase ambiguities are resolved based on the single-differenced observations (outputted by operation s10). This is also known for example from ref. [16]. This operation thus produces ambiguity-reduced observations.

In operation s40, a residual, here referred to as "single-differenced network residual", per carrier-phase observation to each NSS satellite and on each frequency (e.g., L1 and L2), for the pair comprising primary reference station 100 to the secondary reference station 200 under consideration, is estimated based on the estimated position of secondary reference station 200 under consideration (outputted by operation s20) and the resolved carrier-phase ambiguities (outputted by operation s30). In this respect, see for example the possible implementation described in section 4.2.1 below, and especially equation (10). Estimating s40 the single-differenced network residuals effectively shifts the secondary reference station observations to the location of primary reference station 100, removing the geometry because the coordinates of secondary reference stations 200 are known. The single-differenced network residuals are mostly residuals in terms of multipath, although they can also include atmospheric errors under certain circumstances if the atmospheric conditions differ at primary reference station 100 and at the secondary reference station 200 under consideration.

In operation s50, a residual, here referred to as "undifferenced network residual", per satellite and frequency, for accounting for errors affecting observations at the plurality of reference stations 100, 200, is generated based on the estimated single-differenced network residuals (outputted by operation(s) s40, i.e. by the plurality of operations s40 if there is a plurality of secondary reference stations 200). That is, the undifferenced network residuals are generated based on information from all reference stations 100, 200. In this respect, see for example the possible implementation described in section 4.2.6 below. The aim of generating s50 the undifferenced network residuals, per satellite and frequency, is to average the multipath errors over observations from all reference stations 100, 200, at one point in time (i.e., at every epoch). Multipath errors tend to be random and cyclic at a particular reference station, so that they also tend to cancel when averaged over the plurality of reference stations 100, 200. Using the central limit theorem (i.e., the distribution of a sample will approximate a normal distribution as the sample size becomes larger, regardless of the population's actual distribution shape), as multipath errors tend to cause long-tailed error distributions for carrier phase observations, averaging network residuals drives the resultant errors towards a Gaussian distribution.

Here, the wording "for accounting for errors affecting observations at the plurality of reference stations 100, 200" covers at least the following two embodiments, referred to as embodiments (A) and (B).

In embodiment (A) ("no separation between atmospheric and multipath errors"), each undifferenced network residual (per satellite and frequency) accounts for errors affecting observations at the plurality of reference stations. These errors encompass both atmospheric and multipath errors, and operation s60a (which will be described further below) therefore comprises sending carrier-phase observations made by primary reference station 100 but corrected using the undifferenced network residuals (that lump together the effects of atmospheric and multipath errors).

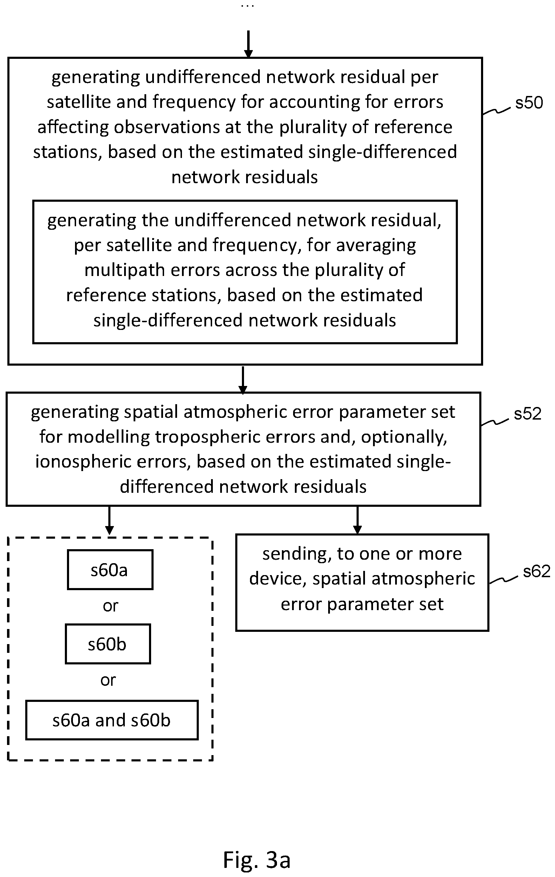

In embodiment (B) ("separation between atmospheric and multipath errors"), each undifferenced network residual (per satellite and frequency) accounts for multipath errors affecting observations at the plurality of reference stations, and the spatial atmospheric error model is additionally (i.e., separately) generated and broadcast (this will be described further with reference to Fig. 3a).

In one embodiment, generating s50 the undifferenced network residuals comprises averaging, especially averaging atmospheric and multipath errors, across the plurality of reference stations 100, 200 by performing a weighted average. In this respect, see for example the possible implementation described in sections 4.2.7 and 4.2.8 below. This is advantageous to make the undifferenced network residuals dependent on, for example, the quality of the observations from the respective reference stations 100, 200. That is, for example, the higher the quality of observations made at a given reference station, the larger the weights assigned to these observations in the averaging of operation s50. If, for example, a secondary reference station 200 among a plurality of secondary reference stations 200 is found to be problematic and/or compromised, the method may comprise de-weighting all observations made at that secondary reference station 200. Specifically, the weight associated with a secondary reference station 200 may be set to 0 to exclude the observations from that reference station. The weights may be not only specific to a reference station but also to a satellite and a carrier frequency.

The reference stations network is able to determine the quality of the corrected data that it distributes to the rover(s) 300. That is, the stochastic behaviour of each satellite carrier-phase observation can be characterised. This information may be distributed to, and used by, the rover(s) 300 to improve their estimation process. For example, noisy measurements can be de-weighted more than clean measurements. This is advantageous to improve both the accuracy of the rover estimates as well as the correctness of the reported precisions.

In one embodiment, weights used in the weighted average depend on a measure of quality of the carrier phase observations per frequency, satellite, and reference station 100, 200.

In one embodiment, weights used in the weighted average depend on, or further depend on, a signal-to-noise-ratio (SNR) of the carrier phase observations per frequency, satellite, and reference station 100, 200. Some existing reference stations provide such SNR values or indicators, which can be used for deriving the weights. In this respect, see also section 4.2.8 below.

In one embodiment, weights used in the weighted average depend, or further depend on, magnitudes of the single-differenced network residuals associated with a frequency and a satellite, for each primary reference station 100 to secondary reference station 200 pair. In this respect, see also section 4.2.8 below.

In one embodiment, weights used in the weighted average depend on, or further depend on, at least one of: (i) a distance between a NSS receiver 300 of interest and each of the plurality of reference stations 100, 200; and (ii) a distance between primary reference station 100 and each secondary reference station 200. For example, a secondary reference station 200 that is within 100 m of primary reference station 100 may be given more weight than a secondary reference station 200 that is 3 km from primary reference station 100.

Returning to Fig. 2a, in operation s60a, carrier-phase observations made by primary reference station 100 and corrected using the undifferenced network residuals (outputted by operation s50) are then sent, e.g. broadcast as a data stream, to one device 300 or to a plurality of devices 300, such as NSS receivers 300 in the field. The transmitted, corrected carrier-phase observations may have at this stage multipath errors being smaller than the multipath errors affecting the raw, uncorrected carrier-phase observations from primary reference station 100. This is thanks to the network residual generation resulting from operation s50, especially if the network of reference stations 100, 200 is a small-scale, dense network, as will be further discussed below.

The verb "to send" means here transmitting, for example from a reference station or more generally from an entity of the reference station system, the corrected carrier-phase observations, i.e. broadcasting or otherwise making them available, to one or a plurality of NSS receivers and/or to one or a plurality of processing entities capable of receiving data from one or some of the NSS receivers. The transmission may for example occur wirelessly. The corrected carrier-phase observations may be encapsulated into messages, packets, or may be transmitted by means of any suitable type of data structure and communication protocol. The information may be transmitted periodically (i.e., at regular intervals) or aperiodically (i.e., at irregular intervals). In one embodiment, the corrected carrier-phase observations are transmitted together with other correction data, for example as part of a correction stream (see e.g. refs. [2] and [4], and specifically for RTK correction formats, see e.g. refs. [6] and [7]). In one embodiment, the correction stream may be regionalized in that it applies to a region of the Earth's surface. The corrected carrier-phase observations lend themselves well to broadcasting in a correction stream, which generally should be received as quickly as possible on the NSS receiver side. The device(s) 300 are NSS receivers and/or processing entities capable of receiving data from a NSS receiver.

A NSS receiver 300 in the vicinity of reference stations 100, 200 may use the received, corrected carrier-phase observations to determine in real-time its position by single-baseline RTK between the primary reference station corrected observations and the NSS receiver observations, as if primary reference station 100 had been used alone for generating the transmitted carrier-phase observations. That is, the method also works with legacy rovers 300 configured to operate based on single-baseline RTK although the transmitted carrier-phase observations from primary reference station 100 may have been corrected prior to transmission using observations from other reference stations (i.e., secondary reference stations 200), i.e. legacy rovers 300 may be able to use a correction stream from primary reference station 100 like a regular RTK correction stream.

The method generally allows the generation of information suitable for use in contributing to computing a positioning solution based on NSS signals received by a NSS receiver 300, by minimizing multipath and atmospheric errors in the resulting positioning solution to increase the resulting positioning solution accuracy, especially in the vertical direction, which is particularly useful for example in construction and agriculture applications.

As an example, in the construction industry, grading, which is, as mentioned above, the process of reshaping land to a desired topography, is generally conducted in two phases. In a first, coarse phase, bulk material is cut or deposited. In a second, fine phase, road base material layers are prepared for paving. It is desirable to use the right amount of material: if thickness is higher than planned, more material may lead to increase costs; if thickness is lower than planned, this may lead to failed roads. In that context, a vertical accuracy better than 1 cm is often desired for the grading levels, and thousands of construction machines are already fitted with legacy rovers capable of operating based in single-baseline RTK. The above-described method allows to address these needs in the construction industry without necessarily having to modify the legacy rovers.

As another example, in agriculture, legacy rovers are already used for control levelling, which is the process of creating a uniformly flat or level surface on a field. Control levelling is advantageous for example to ensure even distribution of water and nutrients and to improve irrigation efficiency. In that context, a vertical accuracy better than 1 cm is also desired, with a high level of availability (at least 95% of the time). The above-described method also allows to address these needs in agriculture without necessarily having to modify the legacy rovers.

The benefits of the method in terms of positioning accuracy, including especially vertical accuracy, are more pronounced in, although not necessarily limited to, settings in which the reference stations 100, 200 are arranged close to each other, i.e. in small-scale, dense settings (small-scale and dense compared to some other systems such as network RTK systems and VRS systems in which reference stations may be spaced about 50 to 100 kilometres apart over a large geographical region; see for example ref. [8], p. 130, right-hand column) with each reference station 100, 200 being distant from its closest neighbour by a distance within the range from 5 cm to 4 km. This is among other things because, as the baselines in these small-scale, dense settings are short, the impact of the atmosphere and multipath tends to cancel. Particularly in such small-scale, dense settings, the above-described method is generally advantageous in terms of complexity and cost compared to some high-precision, but expensive, methods relying on electro-optical robotic universal total stations (UTS) (involving, e.g., laser(s)). Specifically, the above-described method is advantageous at least in that (i) multiple machines (on which rovers are attached) can operate simultaneously, (ii) the method is unaffected by line-of-sight constraints, and (iii) no dedicated operator is needed to set up and configure the electro-optical robotic UTS (setting up and tearing down electro-optical robotic UTS is time consuming and complex).

Furthermore, as an additional benefit, these small-scale, dense settings allow to reduce latency accumulation in the processing of data (compared to large-scale settings relying on a central processing server) and this in turn may positively impact the accuracy of the positioning solution.

In one embodiment, the corrected carrier-phase observations are transmitted over a one-way channel from the reference station system side to the NSS receiver side, i.e. not requiring a communication channel from the NSS receiver side to the reference station system side and therefore not requiring a transmitter at the NSS receiver 300. This differs from some virtual reference station (VRS) systems requiring a two-way communication channel because the rover needs to communicate its approximate position to the network.

In one embodiment, hereinafter referred to as "carrier-phase-and-code-observations embodiment", operations s20 (i.e., the position estimation operation as described above with reference to Fig. 2a) and s30 (i.e., carrier-phase ambiguities resolution operation as explained above with reference to Fig. 2a) may be further based on code observations, i.e. raw code observations, made by primary reference station 100. This is advantageous to allow a reduction in the convergence time, i.e. to accelerate convergence, of the positioning process. The code observations may for example always be used or, alternatively, the code observations may be used only under certain conditions, such as during the initial phase of the positioning process, after cycle slips, and/or when new satellites are acquired.

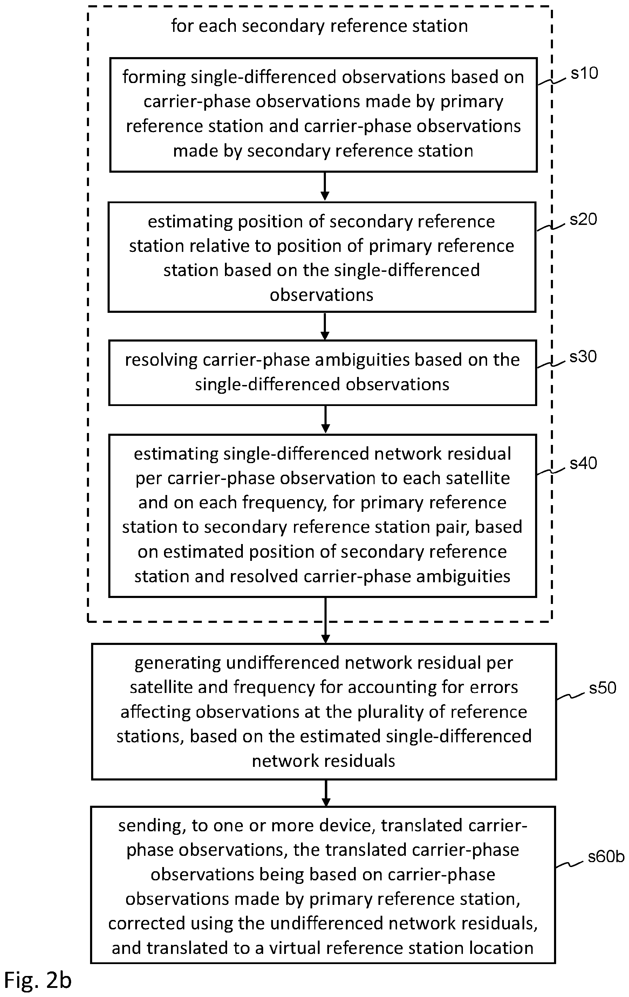

Fig. 2b is a flowchart of a method in one embodiment of the invention, which differs from the method of Fig. 2a in that the method illustrated by Fig. 2b comprises, instead of above-referred operation s60a, an operation s60b comprising: sending, to device(s) 300, translated, i.e. shifted, carrier-phase observations. The translated carrier-phase observations are based on carrier-phase observations made by primary reference station 100, corrected using the undifferenced network residuals, and also translated to a VRS location (see for example, in this respect, ref. [1], section 6.3.7). The VRS location may correspond to the centroid of the network of reference stations 100, 200 or to any position in the vicinity of the network, such as for example a position next to a rover 300, and this may therefore require a two-way channel to and from rover 300, so that rover 300 can provide its approximate position to primary reference station 100. All the other considerations made with reference to Fig. 2a apply also to the embodiment described with reference to Fig. 2b.

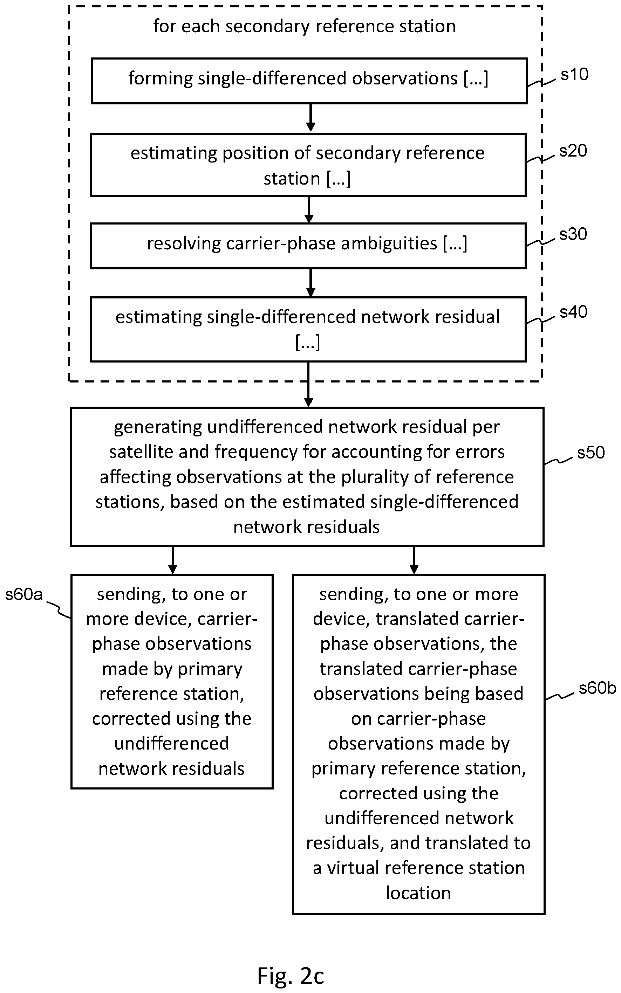

Fig. 2c is a flowchart of a method in one embodiment of the invention, which combines the methods described with reference to Figs. 2a and 2b. That is, the method illustrated by Fig. 2c comprises both operations s60a and s60b. All the other considerations made with reference to Figs. 2a and 2b apply also to the embodiment described with reference to Fig. 2c.

In one embodiment, which corresponds to above-referred embodiment (B) ("separation between atmospheric and multipath errors"), the method described with reference to any one of Figs. 2a, 2b, and 2c may be further such that generating s50 an undifferenced network residual, per satellite and frequency, comprises, as schematically illustrated by Fig. 3a (in which the ellipsis at the top of the flowchart represents operations s10 to s40, which are omitted merely for spatial efficiency in the diagram): generating the undifferenced network residual, per satellite and frequency, for averaging multipath errors across the plurality of reference stations 100, 200, based on the estimated single-differenced network residuals. See also in this respect section 4.2.4 below.

The method then further comprises generating s52 at least one spatial atmospheric error parameter, here referred to as "spatial atmospheric error parameter set", for modelling tropospheric and, optionally, ionospheric errors, based on the estimated single-differenced network residuals. The spatial atmospheric error parameter set constitutes a tropospheric model and, optionally, an ionospheric model, and may comprise a set of tropospheric gradient parameters and, optionally, a set of ionospheric gradient parameters. The spatial atmospheric error parameter set is then sent, e.g. broadcast, s62 to device(s) 300, so that device(s) 300 can interpolate the tropospheric and, optionally, ionospheric error for each measurement at their location. In this embodiment, tropospheric and, optionally, ionospheric errors are therefore separated from multipath errors, and those are also supplied separately to rover(s) 300. This embodiment is advantageous to handle relatively rare meteorological situations where tropospheric errors may be significant. This may happen for example during intense thunderstorms or during sunny days with high ground moistures. The latter can happen for example if the temperature during the day varies considerably, for example from 12°C to 30°C, and this may cause a considerable amount of water vapour to be present in the air. See also in this respect sections 4.2.2 and 4.2.3 below. The embodiment in which the spatial atmospheric error parameter set is further aimed at modelling also ionospheric errors is advantageous to handle high ionospheric activity induced by coronal mass ejections and extreme ultraviolet solar radiation, occurring for example during the peak of the 11-year solar cycle (see e.g. ref. [16]). This is also advantageous in particular if the size of the network of reference stations 100, 200 is larger than a threshold. In other words, in one embodiment, if the size of the network of reference stations 100, 200 is smaller than the threshold (e.g. smaller than 500 x 500 m), the ionospheric parameter estimation is or may be omitted. Other criteria may be used as well to decide whether to perform or omit the ionospheric parameter estimation, such as for example whether solar activity is known to be currently high or low.

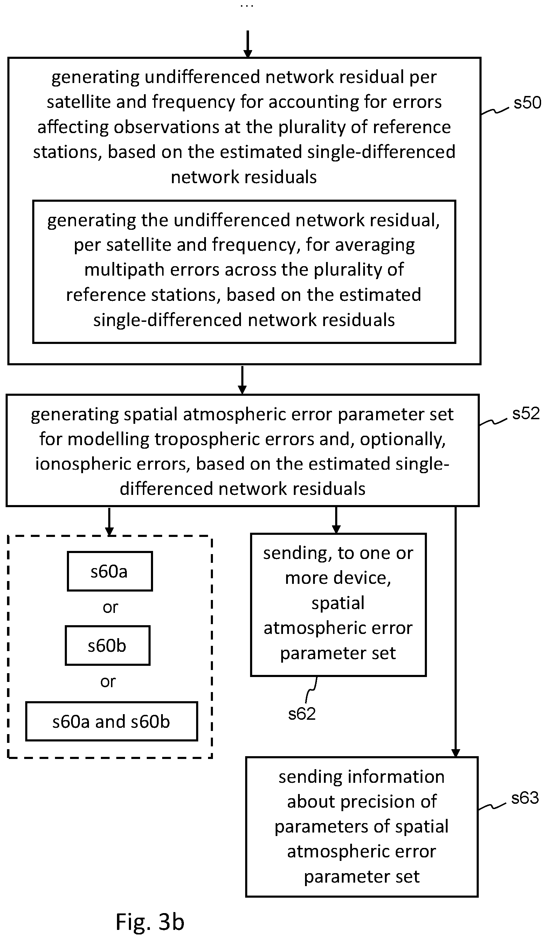

In one embodiment, the method further comprises, as schematically illustrated by Fig. 3b (in which, again, the ellipsis at the top of the flowchart represents operations s10 to s40, which are omitted merely for spatial efficiency in the diagram), sending s63, e.g. broadcasting, information about, i.e. representing, a precision of the parameters of the spatial atmospheric error parameter set. In other words, a description of the uncertainty of the tropospheric model is also sent. Similarly, when modelling ionospheric errors, the uncertainty of the ionospheric model may also be sent. The information about the precision may be derived directly from the process of estimating the parameters, e.g. a least-squares estimator or Kalman filter.

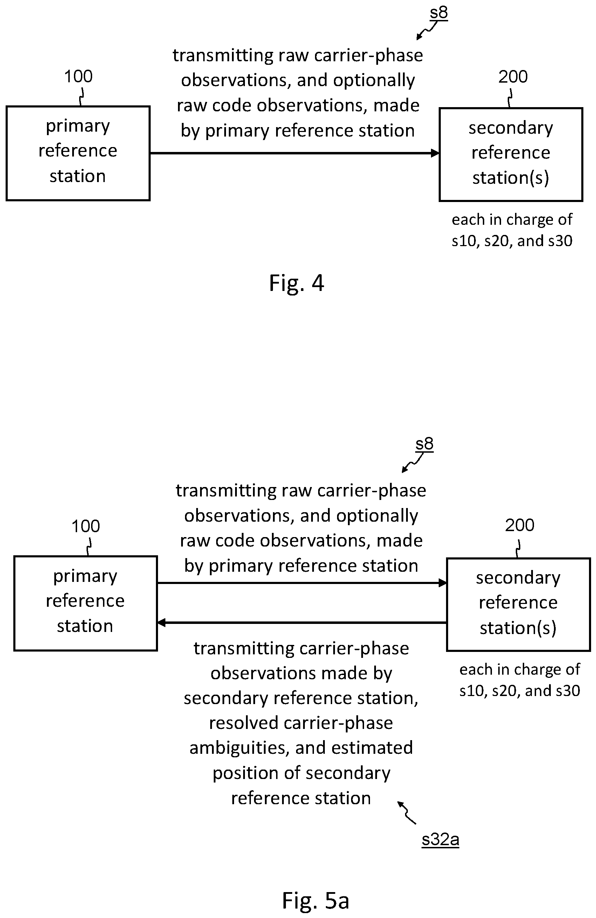

In one embodiment, the method described with reference to any one of Figs. 2a, 2b, 2c, 3a, and 3b comprises the following further operations, for each secondary reference station 200, as schematically illustrated in Fig. 4. Although Fig. 4 shows, for spatial efficiency in the diagram, a single secondary reference station 200, the system may comprise, as discussed above, a plurality of secondary reference stations 200. In this embodiment, before forming s10 the single-differenced observations based, on the one hand, on the carrier-phase observations, and optionally on code observations (see above-described "carrier-phase-and-code-observations embodiment"), made by primary reference station 100 and, on the other hand, on the carrier-phase observations, and optionally on code observations (see again the above-described "carrier-phase-and-code-observations embodiment"), made by the secondary reference station 200 under consideration, primary reference station 100 transmits s8, to the secondary reference station 200 under consideration, the carrier-phase observations, and optionally code observations, made by primary reference station 100.

Then, the secondary reference station 200 under consideration is in charge of performing operations s10, s20, and s30: i.e. forming s10 the single-differenced observations based on the carrier-phase observations, and optionally code observations, made by primary reference station 100 and the carrier-phase observations, and optionally code observations, made by the secondary reference station 200 under consideration; estimating s20 a position of the secondary reference station 200 under consideration relative to a position of primary reference station 100; and resolving s30 carrier-phase ambiguities based on the single-differenced observations. Embodiments in which some operations are performed in each secondary reference station 200, instead of having primary reference station 100 centrally perform all operations, are advantageous in terms of distributed processing and latency in the processing. That is, decentralizing processing tasks across multiple reference stations enhances system efficiency and improves resource utilization. The computationally costly part of the method is generally the estimation s20 of the secondary reference station's position relative to the primary reference station's position and the resolution s30 of the carrier-phase ambiguities for each observed carrier phase measurement. This is the motivation for distributing the computations to the secondary reference stations 200.

In one embodiment, as illustrated by Fig. 5a, after the secondary reference station 200 under consideration has performed operation s10 (single-differenced observations forming/generation), operation s20 (estimating of position of secondary reference station 200 relative to primary reference station 10), and operation s30 (carrier-phase ambiguities resolution), the secondary reference station 200 under consideration transmits s32a, to primary reference station 100, the carrier-phase observations made by the secondary reference station, the resolved carrier-phase ambiguities, and the estimated position of the secondary reference station 200. Primary reference station 100 may then be in charge of performing operations s40, s50, and s60. In other words, raw data, i.e. raw NSS data, may be transmitted from primary reference station 100 to secondary reference station(s) 200, and then each secondary reference station 200 transmits s32a the carrier-phase observations made by the secondary reference station, the resolved carrier-phase ambiguities, and the estimated position of the secondary reference station 200 to primary reference station 100.

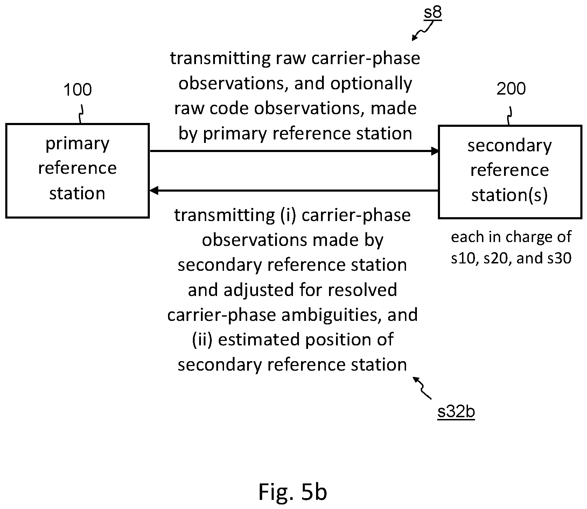

In another embodiment, as illustrated by Fig. 5b, after the secondary reference station 200 under consideration has performed operations s10, s20, and s30, the secondary reference station 200 transmits s32b, to primary reference station 100, (i) the carrier-phase observations made by the secondary reference station 200 and adjusted for, i.e. corrected for, the resolved carrier-phase ambiguities, and (ii) the estimated position of the secondary reference station 200. Primary reference station 100 may then be in charge of performing operations s40, s50, and s60. In other words, raw data, i.e. raw NSS data, may be transmitted from primary reference station 100 to secondary reference station(s) 200, and then each secondary reference station 200 transmits s32b (i) the carrier-phase observations made by the secondary reference station and adjusted for, i.e. corrected for, the resolved carrier-phase ambiguities, and (ii) the estimated position of the secondary reference station 200 to primary reference station 100.

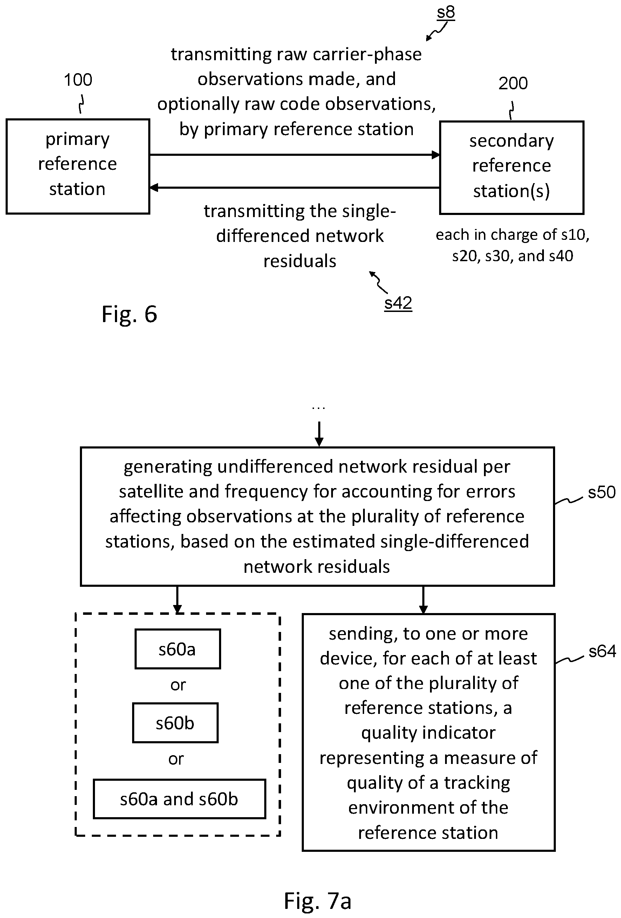

In one embodiment, as illustrated by Fig. 6, after the secondary reference station 200 under consideration has performed operations s10, s20, and s30, it is also in charge of performing operation s40, i.e. estimating the single-differenced network residuals, per carrier-phase observation to each satellite and on each frequency, for the pair of primary reference station 100 to the secondary reference station 200 under consideration, based on the estimated position of the secondary reference station 200 under consideration and the resolved carrier-phase ambiguities. Then, each secondary reference station 200 transmits s42, to primary reference station 100, the single-differenced network residuals. Primary reference station 100 may then be in charge of performing operations s50 and s60.

While Figs. 4 to 6 illustrate that the raw GNSS observations, including carrier-phase observations, and optionally code observations (see above-described "carrier-phase-and-code-observations embodiment"), made by primary reference station 100 are transmitted s8 to each secondary reference station 200 which is then in charge of performing at least operations s10, s20, and s30, the invention is, however, not limited to these embodiments. As already discussed with reference to Figs. 1 and 2a, another entity, or a plurality of other entities, than secondary reference stations 200 may alternatively carry out operations s10 to s60. For example, a central processing entity may be in charge of carrying out operations s10 to s60. Thus, some embodiments of the invention are not limited as to where the network computations are performed.

In one embodiment, as illustrated by Fig. 7a (in which the ellipsis at the top of the flowchart represents operations s10 to s40, which are omitted merely for spatial efficiency in the diagram), the method further comprises: sending s64, to device(s) 300, for each of at least one of the plurality of reference stations 100, 200, a quality indicator representing a measure of quality of a tracking environment of the reference station 100, 200. The quality indicator may relate to SNR and/or network residual magnitude. See also in this respect section 4.2.8 below.

An overall quality indicator for the network-corrected data stream may also be transmitted, i.e. distributed/relayed, to the rover(s) 300. The quality of the network-corrected carrier-phase measurements broadcast by primary reference station 100 may for example take the form of variances for each network-corrected carrier phase measurement. That is, in one embodiment, the method comprises the distribution of network status and alert information to rover(s) 300. For example, if one of the reference stations has been accidentally moved, it is desirable to relay this information to the rover(s) 300. Furthermore, if the data quality at one or more of the reference stations is detected by the network as "bad" then the user should be notified in some way, e.g. via messages sent to the rover, or by SMS, email, etc. See also in this respect section 4.2.9 below.

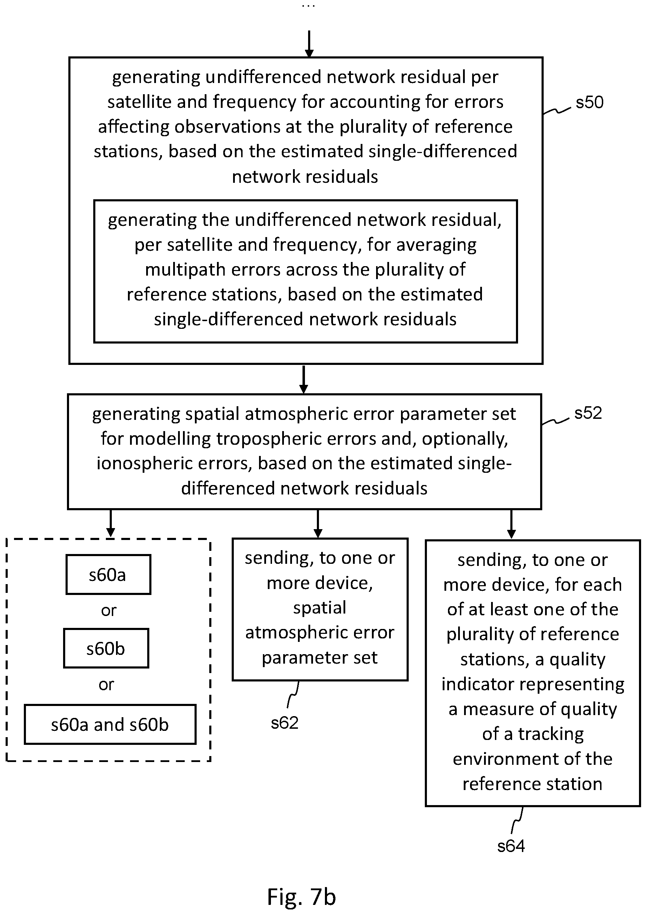

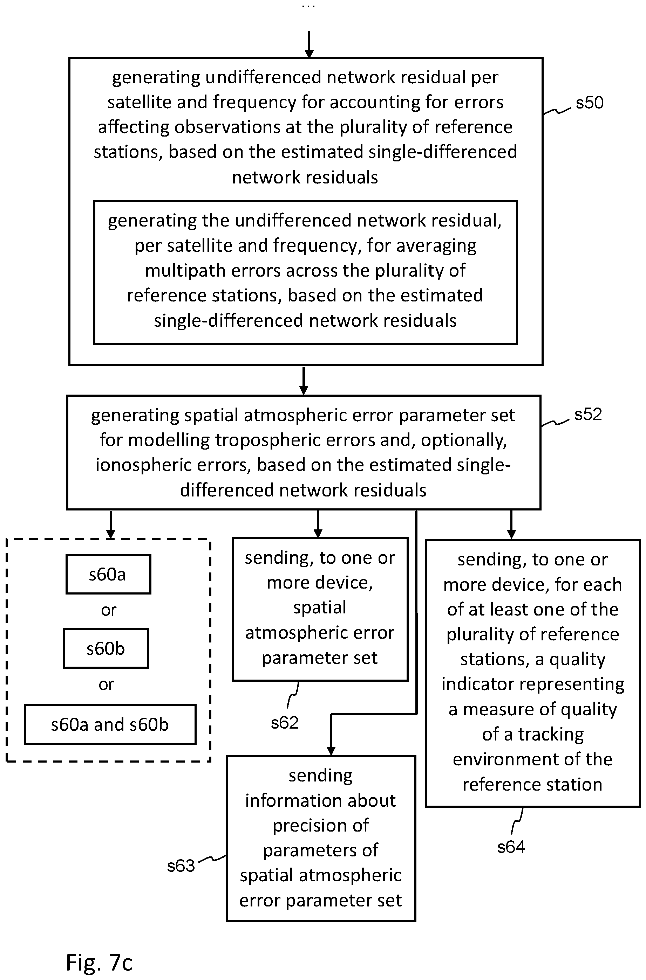

As illustrated by Fig. 7b, the embodiment described with reference to Fig. 3a may be combined with the embodiment described with reference to Fig. 7a. Furthermore, as illustrated by Fig. 7c, also the embodiment described with reference to Fig. 3b may be combined with the embodiment described with reference to Fig. 7a. Again, in Figs. 7b and 7c, the ellipsis at the top of the flowchart represents operations s10 to s40, omitted merely for spatial efficiency in the diagrams.

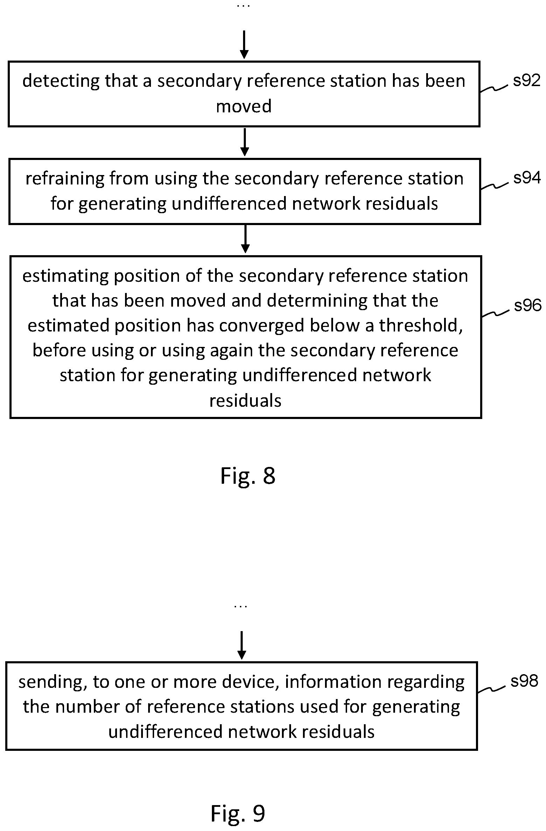

In one embodiment, as illustrated by Fig. 8 (in which the ellipsis at the top of the flowchart may represent any operation previously discussed with reference to Figs. 2a to 7c), the method further comprises: detecting s92 that a secondary reference station 200 has been moved based for example on the relative position estimates of the secondary reference station 200, relative to the primary reference station 100, using single-differenced carrier-phase observations; refraining s94, for a period of time after having detected that secondary reference station 200 has been moved, from using secondary reference station 200 for generating undifferenced network residuals; and estimating s96 a position of secondary reference station 200 that has been moved and determining that the estimated position has converged below a threshold (e.g. 3 mm), before using or using again secondary reference station 200 for generating undifferenced network residuals. In other words, as soon as movement is detected, the affected secondary reference station 200 may be removed from inclusion in the process of generating s50 undifferenced network residuals - for example by assigning it a weight of 0. Secondary reference station 200 may be included again once its position is deemed to have converged to sufficient accuracy. Further, as explained below, status information concerning the number of reference stations used in the process may be transmitted to the rover equipment and be displayed for the user.

This embodiment is advantageous in that it allows for the exclusion of a secondary reference station 200 from the process of generating s50 the undifferenced network residuals in the event that the secondary reference station 200 has been moved, intentionally (e.g., if an operator wishes to adjust an applicable geographical coverage of the method) or unintentionally (e.g. accidentally, such bumped into). In such a manner, the corrected carrier-phase observations sent to the device(s) 300 in the field are not impacted by the data from the excluded secondary reference station 200 until it has been ascertained that the position thereof has converged below a threshold. This convergence process may for example take about 10 to 20 minutes. As the positions of secondary reference stations 200 should be known within 1 to 2 mm to ultimately allow rover equipment to achieve a 5-mm height accuracy, it is desirable that intentional and/or unintentional movement of one or more reference station(s) is detected. As the position of each secondary reference station 200 is continuously estimated and/or monitored, it is possible for the method to detect and accommodate sudden and/or slow changes in the position of one or more reference station. Settlement of a secondary reference station tripod, or a sudden knock to an antenna, are examples of what is likely to occur in the field.

In one embodiment, as illustrated by Fig. 9 (in which the ellipsis at the top of the flowchart represents operations s92 to s96 as described with reference to Fig. 8 and may also represent any operation previously discussed with reference to Figs. 2a to 7c), the method further comprises the following. After, in parallel to, or before operations s92 to s96, information regarding the number of reference stations 100, 200 used for generating s50 the undifferenced network residuals is sent, e.g. broadcast, s98 to device(s) 300. During field operation of rover devices 300, it is beneficial for users to know how many of the reference stations are actively being used to correct the primary reference station stream (s60a, s60b, s62, s63, etc). If for example the number of reference stations used is less than the number of physically deployed reference stations, then corrective action by the user may be able to restore full network operation. The corrective action may for example comprise recharging the batteries of a reference station GNSS receiver or re-establishing the GNSS antenna of a secondary reference station that has blown over in the wind.

In one embodiment, the method further comprises detecting that primary reference station 100 has been moved. Movement of primary reference station 100 may be inferred for example when the computed positions of multiple secondary reference stations 200 shift simultaneously by approximately the same amount. If movement of primary reference station 100 is detected, the primary reference data stream may be suspended as a precaution. Users of the primary reference station correction stream may be alerted and prompted to take corrective action, such as:
A. Checking the primary reference station equipment for dislodgement or damage (e.g. caused by the primary reference station antenna being bumped out of level); and
B. Re-establishing the accurate coordinates of primary reference station 100, either using the already surveyed positions of secondary reference station(s) 200, or independently from a fixed reference station of known coordinates.

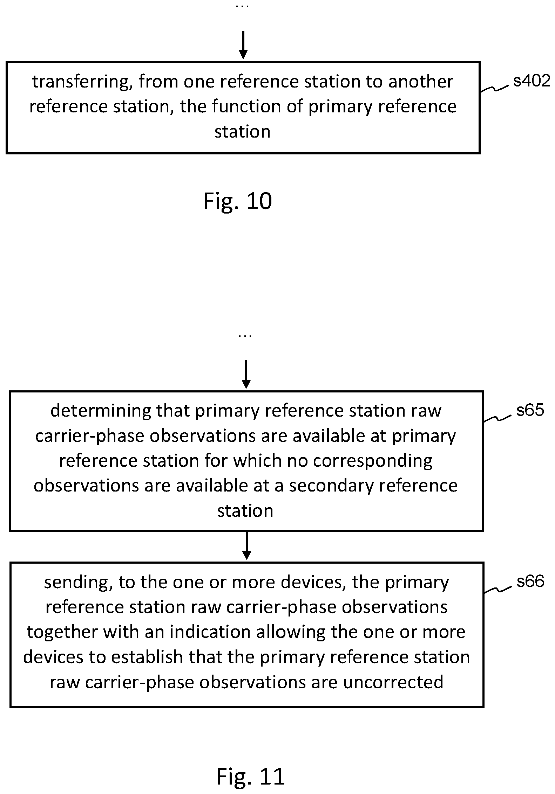

In one embodiment, as illustrated by Fig. 10 (in which the ellipsis at the top of the flowchart may represent any operation previously discussed with reference to Figs. 2a to 7c), the method further comprises: transferring s402, from one reference station to another reference station, the function of primary reference station 100. Moving the primary reference station role, i.e. switching roles, is advantageous because this allows the selection of the most suitable reference station as primary reference station. This enables to handle instances where, for example, the secondary or primary reference station tracking is poor and/or compromised. Switching the primary reference station role may involve an intervention by a user or may be fully automated.

Transferring s402 the function of primary reference station 100 may, in one embodiment, depend on at least one of: (i) availability of communication channels between the reference stations 100, 200; (ii) availability of communication channels between the reference stations 100, 200 and a NSS receiver 300 of interest; (iii) a number of satellites being tracked by reference stations 100, 200; (iv) a position of a NSS receiver 300 with respect to reference stations 100, 200; and (v) a determination that a measure of tracking quality of the current primary reference station 100 is below a threshold. Regarding factor (iii), if, for example, heavy equipment (e.g., a tractor, an excavator, a bulldozer, or the like) moves near the reference station acting as primary reference station 100, the number of satellites being tracked by that reference station may significantly decrease and the method may automatically trigger the transfer of the function of primary reference station 100 to another reference station. In other words, signal obstruction, jamming, and/or excessive multipath may lead to one, some, or all satellites no longer being tracked by the reference station. In this respect, see also, as examples of implementation, section 4.3 below.

In one embodiment, as illustrated by Fig. 11 (in which the ellipsis at the top of the flowchart may represent for example any operation previously discussed with reference to Figs. 2a to 7c), the method further comprises: determining s65 that carrier-phase observations, here referred to as "primary reference station raw carrier-phase observations", are available at primary reference station 100 for which no corresponding observations are available at a secondary reference station 200; and sending s66, to device(s) 300, the primary reference station raw carrier-phase observations together with an indication allowing device(s) 300 to establish that the primary reference station raw carrier-phase observations are uncorrected. If the method comprises sending s60b, to device(s) 300, carrier-phase observations translated to a VRS location, the primary reference station raw carrier-phase observations are also translated to the VRS location. This embodiment enables the transmission of a mixture, i.e. an aggregation, of network-corrected carrier phase data and uncorrected raw carrier phase data. In this respect, see also, as examples of implementation, section 4.3.1 and 4.3.2 below.

In one embodiment, sending s66 the primary reference station raw carrier-phase observations together with the indication is conditional upon at least one of (a) determining that a measure of quality of measurement geometry of the carrier-phase observations made by primary reference station 100 and corrected using the undifferenced network residuals is smaller than a threshold; and (b) determining that a ratio of a measure of quality of measurement geometry of the carrier-phase observations made by primary reference station 100 and corrected using the undifferenced network residuals to a measure of quality of measurement geometry of all carrier-phase observations made by primary reference station 100, whether corrected or not, is smaller than a threshold. In relation to item (a), see for example section 4.3.2 and the test "WPDOPₙₑₜ < GeometryQualityThreshold" as an example of implementation of this item. In relation to item (b), see for example section 4.3.2 and the test "WPDOPᵣₐₜᵢₒ < GeometryRatioThreshold" as an example of implementation of this item.

The above description of operations s65 and s66 in effect means that the following may be transmitted, e.g. broadcast, to the rover(s) 300 in the field (wherein "raw" means uncorrected):
i) raw-untranslated carrier-phase observations;
ii) corrected-untranslated carrier-phase observations;
iii) raw-translated carrier-phase observations;
iv) corrected-translated carrier-phase observations;
v) combination (i.e., aggregation) of raw and corrected-untranslated carrier-phase observations; or
vi) combination (i.e., aggregation) of raw and corrected-translated carrier-phase observations.
That is, items i) to vi) mean that the carrier-phase observations supplied to the rover(s) 300 apply to the same reference point, be that a reference point corresponding a reference station, or a virtual reference point.

In one embodiment, primary reference station 100 is configured to be capable of performing the following three actions (a), (b), and (c) at different points in time: (a) sending only corrected carrier-phase observations (see above-described item ii) or iv)), (b) sending a combination of corrected and uncorrected carrier-phase observations under certain circumstances (i.e., where carrier-phase observations are available at primary reference station 100 for which no corresponding observations are available at a secondary reference station) (see above-described item v) or vi)), and (c) sending, as a fallback measure in situations where network-corrected observations cannot be produced at all for a period of time, only uncorrected carrier-phase observations (see above-described item i) or iii)).

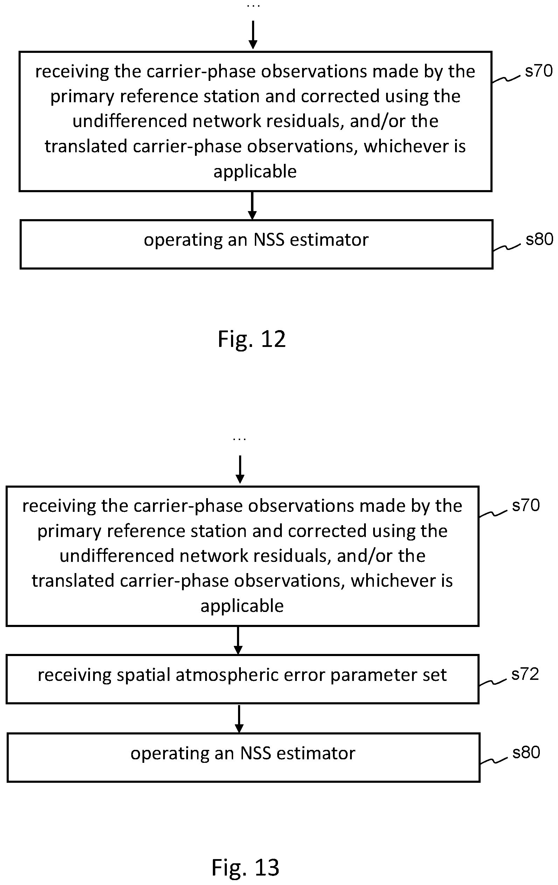

In one embodiment, as illustrated by Fig. 12 (in which the ellipsis at the top of the flowchart may represent for example any operation previously discussed with reference to Figs. 2a to 7c), the method according to any one of the above-described embodiments comprises additional operations that are carried out by (i) a NSS receiver 300, and/or (ii) a processing entity capable of receiving data from NSS receiver 300, to estimate parameters useful to determine a position. NSS receiver 300 observes NSS signals from a plurality of NSS satellites over multiple epochs. The additional operations comprise: receiving s70 the carrier-phase observations made by primary reference station 100 and corrected using the undifferenced network residuals, and/or the translated carrier-phase observations, whichever is or are applicable; and operating s80 at least one estimation process, each estimation process being here referred to as "NSS estimator". Each NSS estimator uses state variables and computes values of its state variables based on: NSS signals observed by NSS receiver 300, and/or information derived from the NSS signals, and further based on the received, corrected carrier-phase observations and/or the translated carrier-phase observations, whichever is or are applicable.

Each NSS estimator is or comprises an algorithm, procedure, or process, or software, firmware, hardware, and/or any form of machine-readable instructions to implement such an algorithm, procedure, or process, in which a set of state variables (or "state vector") is maintained over time, i.e. the values of the state variables are estimated based on measurements made overtime. The measurements may comprise data representing the observed NSS signals. The estimator involves or comprises, in one embodiment, a Kalman filter, a least mean squares (LMS) estimator, and/or a robust estimator. The invention is, however, not limited to the use of Kalman filter(s), LMS estimator(s), and/or robust estimator(s). Other estimation processes, filters, or filter techniques may be used.

The estimator's state variables may represent, for example, the position of the NSS receiver, an offset in the position of the NSS receiver relative to another position (the offset per se being therefore a relative position), an offset in the position of the NSS receiver relative to another epoch, the rate of change of the position, the rate of change of the offset in the position, a bias related to the NSS receiver, a bias related to any of the NSS satellites, a bias related to any of the satellite systems, a bias related to any of the NSS signals, the rate of change of any of the said biases, or any combination of the above.

In one embodiment, the method uses a single estimator. In another embodiment, the method uses two estimators. The two estimators may for example be a precise estimator and a timely estimator as described in ref. [5] (see notably, but not only, paragraphs [0030] to [0034] in ref. [5]).

In one embodiment, as illustrated by Fig. 13 (in which the ellipsis at the top of the flowchart may represent for example any operation previously discussed in relation to Figs. 2a to 7c), the method further comprises, in addition to the operations described with reference to Fig. 12: receiving s72 at least one spatial atmospheric error parameter, here referred to as "spatial atmospheric error parameter set", for modelling tropospheric errors and, optionally, ionospheric errors. Operation s72 may be performed after, before, and/or concurrently to operation s70 described with reference to Fig. 12. Each NSS estimator computes values of its state variables further based on the received spatial atmospheric error parameter set. Specifically, a rover 300, after receiving the spatial atmospheric error parameter set for modelling tropospheric errors and, optionally, ionospheric errors, may interpolate the tropospheric error and optional ionospheric error for each measurement at its location. This is why, in some embodiments, it is useful to separate the spatial atmospheric error parameter set from the corrected carrier-phase observations. The spatial atmospheric error parameter set may trigger some interpolation process at the rover side, whereas the multipath errors on the other hand are accounted for to correct the carrier-phase observations broadcast by primary reference station 100 to the rover(s) 300.

In one embodiment, the method described with reference to Fig. 13 further comprises receiving information, here referred to as "precision information", about, i.e. representing, a precision of the parameters of the spatial atmospheric error parameter set and each NSS estimator computes values of its state variables further based on the received precision information.

In one embodiment, the method described with reference to Fig. 12 or 13 may be further such that NSS receiver 300 and/or processing entity capable of receiving data from NSS receiver 300, whichever applies, is hereinafter referred to as "user device", and the user device is configured to be able to use the corrected carrier-phase observations, and/or the translated carrier-phase observations, whichever is or are applicable, depending on at least one of: (i) a digital key being available to the user device; (ii) a software, firmware, and/or hardware option being activated on the user device; and (iii) transmitted information, such as for example a health flag, indicating that the corrected carrier-phase observations, and/or the translated carrier-phase observations, whichever is or are applicable, are currently usable. This enables to control which device 300 has access to the network-corrected stream.

Let us now further discuss the context in which some embodiments of the invention have been developed as well as further embodiments of the invention.

### 1. Introduction

High-precision GNSS positioning is used for a number of applications including: earth moving, construction, agriculture, monitoring, surveying, geodesy, autonomous vehicles, etc.

The term high-precision GNSS applies to carrier-phase-based techniques that generally deliver positions with accuracies in the millimeter to decimeter range. High-precision GNSS techniques encompass real-time kinematic (RTK), network RTK, virtual reference station (VRS)-based techniques, and precise point positioning (PPP).

There are some high-value applications, particularly in earth moving and construction, that demand millimeter-level height accuracy. Some of these applications may nowadays be served by electro-optical methods which are expensive and complicated to install and operate. Other applications have not yet been realized. There is a need for GNSS products and techniques that address demanding height accuracy requirements.

GNSS carrier phase measurements have an inherent precision at the 1-2 mm level. However, multipath and atmospheric errors degrade the overall positioning accuracy achievable with high-precision RTK techniques. Some embodiments of the invention relate to methods that rely on combining GNSS data from multiple RTK reference stations in order to minimize multipath and atmospheric errors. With a suitable multi-reference RTK setup, the aim is to enable rover GNSS equipment to achieve height accuracy around 5 mm, 95% of the time.

### 2. Considerations regarding context

### 2.1. Preliminary considerations

Network RTK techniques were developed in the late 1990s (see e.g. ref. [9]). A goal of network RTK systems is to reduce ionospheric errors and tropospheric errors and thus avail users within the network of centimeter-level positioning accuracy without the need to establish and maintain their own reference station(s). In order to bound ionospheric, tropospheric and satellite orbit errors, a network of permanent, or semi-permanent GNSS tracking stations is established over a wide region such as a city, state, or country (for example SAPOS, GPSnet, GSI networks). Typically, interstation spacing of GNSS reference stations is between 40 to 100 km. Increasing the density of the reference station network increases establishment and maintenance costs.

### 2.2. Network RTK system

In some existing network RTK systems, data from GNSS reference receivers are concentrated at a data processing center in real-time and this data is used to generate correction streams for users in the network. The corrections may take the form of:
- Virtual reference station (VRS) stream, i.e. customized stream that mimics that of an RTK reference station adjacent to the user, or
- Broadcast network RTK data, i.e. a spatial model of ionospheric- and geometric-errors on each satellite.

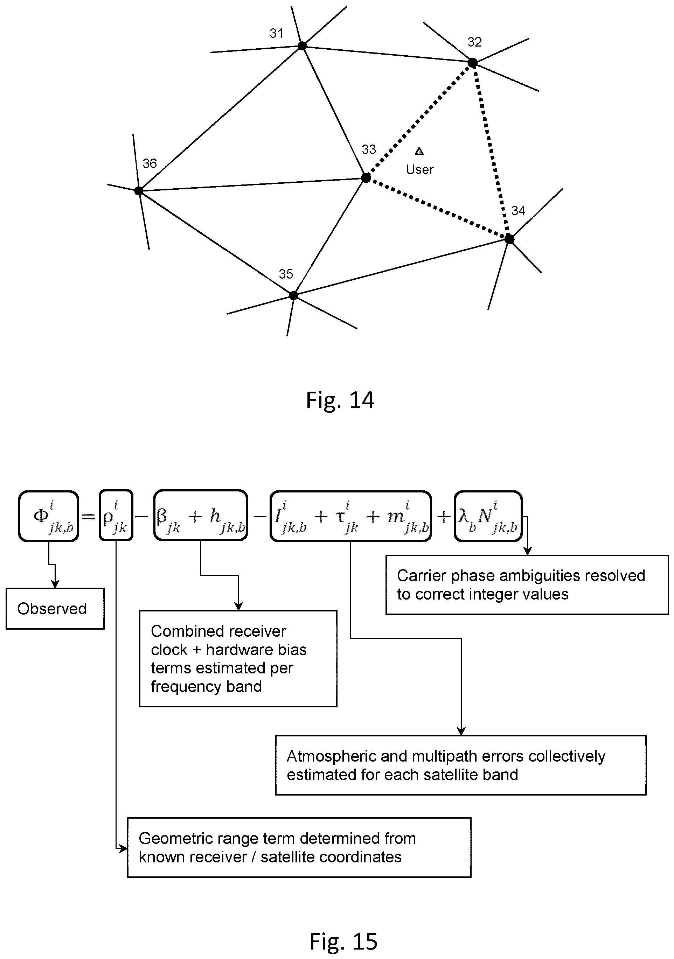

The data processing centers estimate the coordinates of all reference stations in the network. Based on these known coordinates, geometric errors between stations are computed using single-differenced ionospheric-free carrier phase data. Similarly, single-differenced geometry-free carrier phase data combinations, such as the iono-residual carrier phase combination of multi-frequency GNSS observations, are used to compute the ionospheric bias to each satellite in view. These ionospheric and geometric errors are subsequently formed into correction models that are interpolated for users operating within the network. An example of this is diagrammatically shown in Fig. 14, whereby ionospheric and geometric errors are determined between reference stations 32-33, 32-34, and 33-34, for each tracked satellite. A simple two-dimensional gradient model can then be generated for the ionospheric and geometric errors on each satellite, within the triangle 32-33-34. Simple 2D interpolation is often then used to compute the corresponding ionospheric and geometric errors expected for a user operating within triangle 32-33-34. Finally, the network correction data applied by the user is a combination of interpolated ionospheric and geometric errors on each satellite, combined with the physical GNSS data stream from the nearest reference station. In the example of Fig. 14, the nearest physical reference station for the user is 33.

Ionospheric and geometric errors are generally linearly interpolated across each reference network triangle, but in reality, ionospheric and tropospheric errors do not behave in a linear fashion, particularly if reference station spacing is large (i.e., larger than 50 km). Therefore, interpolation errors can be larger than cm-level for a user operating at the center of a triangle. Interpolation errors tend to impact height accuracy more than horizontal coordinate components.

In other words, Fig. 14 is a map view of a portion of a GNSS tracking network. Ionospheric and geometric errors for each observed satellite are determined between adjacent reference stations (nodes) in the network. These errors are interpolated and used in conjunction with GNSS data from the nearest physical reference station, to produce a correction stream for the user(s).

### 2.3. Persistent multipath errors

Reference stations are generally intentionally sited in clean GNSS tracking environments. However, some level of multipath and obstruction may occur. A disadvantage of the existing network RTK methods described above is that the network correction stream contains the full carrier-phase multipath errors of the nearest physical reference station. Furthermore, multipath errors at each reference station are not readily separated from ionospheric and geometric errors in the network RTK approach. This in turn leads to suboptimal positioning accuracy of user equipment that rely on the network corrections.

### 2.4. Latency inflates errors

GNSS observation data generated at each reference station may be transmitted to a central processing server via the Internet or over wireless networks. Given the volume of data that needs to be transmitted and concentrated at the processing center, delays tend to accumulate and the latency of the correction stream that is finally received by users may be up to several seconds. Rover GNSS equipment time synchronizes its locally generated GNSS data with the latent corrections received from the network. The synchronized data is used to form single-differenced (common-satellite) observations that largely remove satellite-related errors and atmospherics. A synchronous, but latent position solution is then computed. Subsequently, a low-latency position solution is generated at the rover by propagating the latent synchronized position estimates forward to the current time. The accuracy of the position propagation process is dependent on the stability of the GNSS satellite clocks and atmospheric errors. As a rule of thumb, each second of position propagation increases errors by 1 to 1.5 mm. When utmost accuracy is required, propagation delays should be minimized.

### 2.5. New multi-base RTK technique

In accordance with some embodiments of the invention, a multi-base RTK system is provided which is aimed at providing maximum accuracy over a focused geographic area. The system is expected to benefit construction machinery control, engineering applications and surveying, especially those requiring or benefiting from mm-level height accuracy. The system comprises a network of two or more wirelessly interconnected reference receivers (i.e., reference stations) located with for example a smaller-than-2-km station spacing. One aim of the system is to minimize the impact of carrier-phase multipath and atmospheric errors of the reference RTK correction stream supplied to the user(s).

In some embodiments, the data processing aspects of the method are such that the computational burden is distributed across the GNSS reference stations, and, in doing so, the method may allow for scalability, and to minimize latency in the corrections delivered to users. Furthermore, existing rover equipment may utilize the multi-base corrected data in the same way in which single-base RTK data is processed. That is, the computational burden of rover equipment is not increased. The method therefore provides, in some embodiments, a convenient retrofit for a number of existing GNSS RTK rovers.

Here is a summary of some elements of the method and system in accordance with some embodiments of the invention:
- Generation of a single RTK correction stream to rover equipment that is largely free of carrier-phase multipath errors. The correction stream may be directly usable by legacy RTK rovers.
- Multi-base network that may be intentionally small in spatial extent in order to essentially cancel ionospheric errors and minimize tropospheric errors.
- Accurate estimation of relative displacement of all reference stations 100, 200 in the network.
- Use of uncombined GNSS carrier phase observations, rather than iono-free and geometry-free carrier phase combinations.
- Adaptive weighting scheme that accounts for the relative merits of each reference station observation quality.
- Computation of multi-base station coordinates and network residuals by GNSS reference stations in the field, rather than relying on concentrating multi-base data at a remote processing center.

### 3. Theoretical background

### 3.1. Carrier phase observation equation

For the purposes of the theoretical development, carrier phase observations can be described in terms of the following equation: ${Φ}_{j , b}^{i} \left(t\right) = {ρ}_{j}^{i} \left(t\right) - {β}_{j} \left(t\right) + {h}_{j , b} \left(t\right) + {T}^{i} \left(t\right) - {I}_{j , b}^{i} \left(t\right) + {τ}_{j}^{i} \left(t\right) + {m}_{j , b}^{i} \left(t\right) + {λ}_{b} {N}_{j , b}^{i}$ where:

| | |
|---|---|
| ${Φ}_{j , b}^{i} \left(t\right)$ | Carrier phase observation from receiver j, to satellite i, at epoch t, made on frequency band b. The carrier phase observations are given in meters; |
| ${ρ}_{j}^{i} \left(t\right)$ | Geometric range from receiver j, to satellite i, at receiver epoch t, where: |
| | ${ρ}_{j}^{i} \left(t\right) = \sqrt{{\left\{{X}^{i}\left(t\right)-{x}_{j}\left(t\right)\right\}}^{2} + {\left\{{Y}^{i}\left(t\right)-{y}_{j}\left(t\right)\right\}}^{2} + {\left\{{Z}^{i}\left(t\right)-{z}_{j}\left(t\right)\right\}}^{2}}$ |
| | {*X^{f}*(*t*), *Yⁱ*(*t*), *Zⁱ*(*t*)} = satellite i, earth-centered, earth-fixed coordinates; |
| | {*xⱼ*(*t*),*yⱼ*(*t*),*zⱼ*(*t*)} = receiver j, earth-centered, earth-fixed coordinates; |
| *βⱼ*(*t*) | Clock bias for receiver j, at epoch t; |
| *h_{j,b}*(*t*) | Hardware bias for receiver j, on frequency band b, at epoch t; Hardware delays typically vary slowly with time; |
| *Tⁱ*(*t*) | Clock bias on satellite i, at epoch t; |
| ${I}_{j , b}^{i} \left(t\right)$ | Ionospheric bias experienced by receiver j to satellite i, at epoch t; Ionospheric effect is frequency-dependent (frequency of band b = *f_{b}*); The ionospheric bias for frequency b, can be expressed in terms of the corresponding ionospheric bias at say the GPS L1 frequency: |
| | ${I}_{j , b}^{i} \left(t\right) = \frac{{f}_{b}^{2}}{{f}_{L 1}^{2}} {I}_{j , L 1}^{i} \left(t\right)$ |
| ${τ}_{j}^{i} \left(t\right)$ | Tropospheric bias experienced by receiver j to satellite i, at epoch t; |
| ${m}_{j , b}^{i} \left(t\right)$ | Carrier phase multipath (receiver-, satellite-, band- and time-dependent), at epoch t; |
| ${N}_{j , b}^{i} \left(1\right)$ | Carrier phase ambiguity (receiver, satellite, band dependent); Remains constant after carrier lock is maintained; |
| *λ_{b}* | Carrier phase wavelength for band b. |

Differential techniques are used to remove satellite errors and reduce the impact of atmospheric errors seen by two closely spaced receivers (j and k). This leads to the following single-differenced carrier-phase observation equation: ${ΔΦ}_{jk , b}^{i} \left(t\right) = {Δρ}_{jk}^{i} \left(t\right) - {Δβ}_{jk} \left(t\right) + {Δh}_{jk , b} \left(t\right) - {ΔI}_{jk , b}^{i} \left(t\right) + {Δτ}_{jk}^{i} \left(t\right) + {Δm}_{jk , b}^{i} \left(t\right) + {λ}_{b} {ΔN}_{jk , b}^{i}$ where the single-differenced quantities are generated as follows: ${ΔΦ}_{jk , b}^{i} \left(t\right) = {Φ}_{k , b}^{i} \left(t\right) - {Φ}_{j , b}^{i} \left(t\right)$

For brevity, the *Δ* symbol is dropped from single-differenced quantities in the following development as is the epoch suffix "(t)", leading to the following simplified observation equation: ${Φ}_{jk , b}^{i} = {ρ}_{jk}^{i} - {β}_{jk} + {h}_{jk , b} - {I}_{jk , b}^{i} + {τ}_{jk}^{i} + {m}_{jk , b}^{i} + {λ}_{b} {N}_{jk , b}^{i}$

### 3.2. Quantification of errors affecting single-differenced carrier phase observations

Table 1 provides a summary of the errors affecting single-differenced carrier phase observations.

**Table 1. Summary of error sources affecting multi-band single-differenced carrier phase observations.**

| **Symbol** | **Error source** | **Magnitude** | **Description** |
|---|---|---|---|
| *βⱼₖ* | Receiver clock bias | >> 100 m | Bias common to all tracked satellites |
| *h_{jk,b}* | Receiver hardware bias | 2-5 mm | Magnitude of error affected by temperature of receiver |
| ${I}_{jk , b}^{i}$ | Differential ionospheric bias | 1-10 ppm | Under stable ionospheric conditions, and baselines < 1 km, differential ionospheric bias is typically < 2 mm. |
| | | | With a disturbed ionosphere, this term can reach decimeter-level with high-rate (> 1 Hz) fluctuations (scintillation). |
| ${τ}_{jk}^{i}$ | Differential tropospheric bias | 1-20 ppm | Desirable to keep baseline lengths short in order to minimize effect. Correlation times up to several minutes. |
| ${m}_{jk , b}^{i}$ | Multipath | < 0.25 cycles | Approximated as a first-order Gauss-Markov process with 30-60s correlation time. |
| | | | Minimized with high-quality antennas and clean tracking environment. |
| ${N}_{jk , b}^{i}$ | Ambiguity | +/- 10e+6 | Integer cycle bias resulting from an interruption in carrier tracking at receiver j or k. |
| | | | Should be resolved to achieve mm-level accuracy. |

### 3.3. Estimation of multipath and atmospheric errors

In the context of network RTK, the coordinates of all reference stations are determined and assumed to be known. Furthermore, integer carrier phase ambiguity terms are also estimated and constrained.

The receiver clock and hardware bias terms can be combined and estimated for each tracking band. That is, grouped biases can be estimated respectively for: GPS L1, GPS L2, GAL E5, GAL E1, etc. (where "GAL" refers to a Galileo satellite)

The remaining unknown terms on the RHS of equation (5) include (see Fig. 15): (a) multipath, (b) tropospheric bias, and (c) ionospheric bias.

Given ambiguity-corrected, single-differenced carrier phase measurements, collected on a baseline of known coordinates, it is possible to estimate network residuals, equal to the combined atmospheric and multipath errors at each epoch: ${Ω}_{jk , b}^{i} = - {I}_{jk , b}^{i} + {τ}_{jk}^{i} + {m}_{jk , b}^{i}$

The accuracy of the estimated network residuals ( ${Ω}_{jk , b}^{i}$) is commensurate with the baseline coordinate accuracy and the inherent measurement noise - typically millimeter-level.

### 4. Network approach

In a network RTK approach, reference stations should preferably be sited in low-multipath environments. However, in practice, many reference stations may suffer from multipath and some signal obstructions. Furthermore, localized tropospheric effects, caused for example by heavy rain clouds, may disturb GNSS observations, thus degrading RTK height accuracy. Yet furthermore, under high solar activity, ionospheric errors may not completely cancel between closely spaced receivers.

Fig. 1, which has been already described above, schematically illustrates a multi-reference network RTK setup in one embodiment of the invention, in which reference stations 100, 200 may for example be sited around the perimeter of the region of operation (as illustrated). In this case, the ionosphere and troposphere are probed for each incident satellite signal received across the network. The atmospheric errors can then be interpolated for rovers 300 operating within the bounds of the network.

The multi-reference field setup of Fig. 1 involves one primary reference station 100, plus one or more secondary reference stations 200; in the example of Fig. 1, there are 3 secondary reference stations 200. The function of the primary and secondary reference stations 100, 200 is further described below.

### 4.1. Secondary reference station processing

In some embodiments, secondary reference stations 200 may perform two functions: 1) determine, i.e. estimate s20, their location relative to primary reference station 100, and 2) transmit s32b ambiguity-corrected carrier phase data back to primary reference station 100.

To do so, secondary reference stations 200 may each receive s8 raw GNSS data from primary reference station 100 via any suitable RTK correction messaging protocol, e.g. a RTCM protocol. Each secondary reference station 200 then forms s10 single-differenced observations with locally collected GNSS observations and uses this data to estimate s20, s30 baseline vector components and carrier-phase ambiguities. Once carrier phase ambiguities are estimated and resolved to their correct integer values, each secondary reference station 200 may transmit s32b ambiguity-leveled (ambiguity-corrected) GNSS carrier phase data back to primary reference station 100. The ambiguity-leveled observations for secondary reference station k, based on primary reference station j, are given for satellite i, frequency band b, as: $\left({Φ}_{k , b}^{i}-{λ}_{b}{N}_{jk , b}^{i}\right)$

Carrier phase ambiguities are resolved to integer values in double-differenced form, i.e. between primary and secondary reference stations and between satellites. However, to correct the secondary reference station carrier phase observations, single-differenced ambiguities are used to correct the data, with an arbitrary selection of a reference satellite ambiguity value.

The computed, i.e. estimated, coordinates of each secondary reference station 200 relative to primary reference station 100 are also broadcast back s32b to primary reference station 100 as part of the ambiguity-leveled GNSS observation data.

As the computational effort to process the primary and secondary reference station data may be high, it is advantageous to distribute this functionality to each of the respective secondary reference stations 200. An alternative is to have all secondary reference station data centrally processed at primary reference station 100. Having the secondary reference stations 200 compute, i.e. estimate, s20 their coordinates and generate s30 ambiguity-leveled data helps to distribute processing and therefore allows for network scalability.

### 4.2. Primary reference station processing

In some embodiments, primary reference station 100 acts as central hub for network processing. It may perform the following functions:
1. Broadcasts s8 raw GNSS data to secondary reference stations 200;
2. Receives s32b ambiguity-leveled GNSS data from each of the secondary reference stations 200, as well as their estimated coordinates;
3. Estimates s40 network residuals for each satellite carrier phase observation taken at each primary-to-secondary reference station pair;
4. Based on the estimated network residuals in the previous step, one of the following approaches may be taken:
   a. Multipath, tropospheric and any ionospheric errors are considered as a single lumped error (see above-referred embodiment (A)). Primary reference station 100 broadcasts GNSS observations that are corrected for the averaged lumped multipath and atmospheric errors;
   b. A tropospheric model is estimated to describe how this error varies as a function of location. The tropospheric model is then removed from the network residuals, leaving just the multipath errors (see above-referred embodiment (B)).
      Primary reference station 100 broadcasts s60a GNSS observations that are corrected for the averaged multipath errors; and a separate tropospheric model is broadcast s62.
   c. A tropospheric model and an ionospheric model are estimated to describe how these errors vary as a function of location. The tropospheric model and the ionospheric model are then removed from the network residuals, leaving just the multipath errors. Primary reference station 100 broadcasts s60a GNSS observations that are corrected for the averaged multipath errors; and a separate tropospheric model and separate ionospheric model are broadcast s62.
Steps 3 and 4 are described in more detail below.

### 4.2.1. Primary-secondary network residual estimation

The single-differenced carrier phase observation equation (5), given above, can be rearranged such that observed, known quantities are grouped together on the LHS, i.e.: $\left({Φ}_{jk , b}^{i}-{λ}_{b}{N}_{jk , b}^{i}-{ρ}_{jk}^{i}\right) = - {β}_{jk} + {h}_{jk , b} - {I}_{jk , b}^{i} + {τ}_{jk}^{i} + {m}_{jk , b}^{i}$

The geometric range term ${ρ}_{jk}^{i}$ is computed from known primary and secondary reference stations coordinates plus the coordinates of satellite i. This leaves the receiver clock term *βⱼₖ*, receiver hardware bias term *h_{jk,b}*, atmospheric bias terms and multipath on the RHS of equation (8).

The receiver clock term *βⱼₖ* is common to all carrier observations, while the hardware bias term *h_{jk,b}* is common to all satellite carrier observations on the same band b. At each epoch, the receiver clock and hardware bias terms can be estimated via the weighted mean, or median, of all common ambiguity and geometric range reduced observations (LHS of equation (8)). Once estimated, *βⱼₖ* and *h_{jk,b}* are assumed known and are moved to the LHS of equation (8), leaving: $\left({Φ}_{jk , b}^{i}-{λ}_{b}{N}_{jk , b}^{i}-{ρ}_{jk}^{i}+{β}_{jk}-{h}_{jk , b}\right) = - {I}_{jk , b}^{i} + {τ}_{jk}^{i} + {m}_{jk , b}^{i}$

The ionospheric biases on the RHS of equation (9) are frequency-dependent and therefore can be separated from the tropospheric errors and multipath. A single ionospheric parameter may generally be estimated for each satellite i, where the parameter is defined for a fixed frequency, such as GPS L1, i.e.: ${I}_{jk , L 1}^{i} \left(t\right)$. Therefore, the ionospheric parameter for each carrier frequency band b, is related to the GPS L1 ionospheric bias according to: ${I}_{jk , b}^{i} \left(t\right) = \frac{{f}_{b}^{2}}{{f}_{L 1}^{2}} {I}_{jk , L 1}^{i} \left(t\right)$.

Because the primary to secondary reference station spacing can be chosen to be short, ionospheric errors can be eliminated, or at least in all ionospheric conditions except for highly disturbed ionospheric conditions.

The simplified single-differenced network residual carrier phase observation equation can therefore be written as: $\left({Φ}_{jk , b}^{i}-{λ}_{b}{N}_{jk , b}^{i}-{ρ}_{jk}^{i}+{β}_{jk}-{h}_{jk , b}\right) = {τ}_{jk}^{i} + {m}_{jk , b}^{i}$

In this case, the remaining unmodelled error sources shown on the RHS of equation (10) can be assumed to emanate from differential tropospheric delay and multipath errors.

### 4.2.2. Tropospheric errors

Tropospheric errors are spatially correlated and therefore affect all GNSS observations according to the satellite elevation and azimuth angles and the location of the receiver. Under normal conditions, the troposphere is a relatively homogeneous medium and therefore its effect is canceled via single-differencing GNSS observations between two closely spaced receivers, to commonly tracked satellites. However, during severe precipitation events, or during periods of variable levels of water vapor in the lower troposphere, differential tropospheric errors may reach values larger than 20 ppm (see ref. [10]).

Water vapor density in the troposphere decreases exponentially with altitude. Over 90% of water vapor exists below an altitude of 6 km (see Fig. 5a in ref. [11], which shows the distribution of water vapor in the troposphere as a function of altitude and time of year). Warm air can hold a greater percentage of water vapor. Therefore, tropospheric water vapor density may increase during summer months and during the day when solar radiation warms the ground and the lower portion of the atmosphere.

The lateral distribution of water vapor is known to follow a Gaussian random field (GRF) behavior at small scales (smaller than or equal to 6 km). In that regard, see for example Fig. 9(c) of ref. [12], which shows gradients in total column water vapor (TCWV) as determined from satellite imagery.

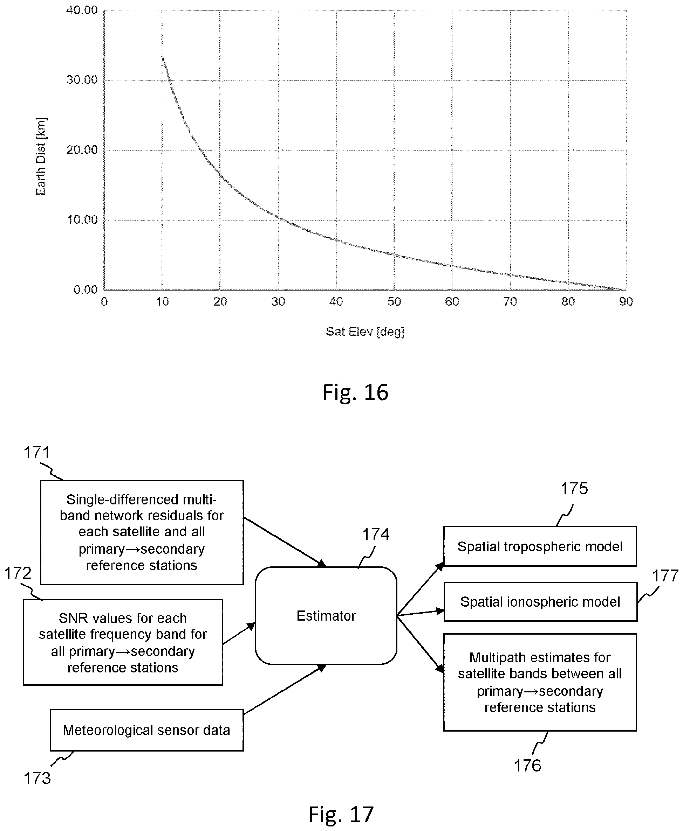

Even if two GNSS receivers are located within say 500 m of each other, GNSS signals from the same satellite transit through portions of the troposphere that extend tens of kilometers away from the user location (as shown in Fig. 16, which shows the relationship between satellite elevation angle and the Earth distance to the tropospheric pierce point at an altitude of 6 km) and are likely to suffer from millimeter-to-centimeter differences in tropospheric delay. The Earth distance here refers to the distance on a curved, assumed spherical Earth.

It is believed that the larger than normal differential tropospheric delays are driven by spatial irregularities in water vapor around the GNSS reference stations.

It is advantageous, in some embodiments, to separate tropospheric errors from multipath errors as part of the data processing method. This allows GNSS rover receivers 300 to gain the maximum benefit from data served by the network. Multipath errors may be averaged over all reference stations 100, 200 in the network. On the other hand, tropospheric errors have a spatial component and may therefore be interpolated to the rover location.

### 4.2.3. Spatial atmospheric model representation

The tropospheric error for a single satellite observed between reference stations j and k may be described in terms of east and north spatial gradients according to: ${τ}_{jk}^{i} = {γ}_{e}^{i} \left({e}_{k}-{e}_{j}\right) sin \left({α}^{i}\right) + {γ}_{n}^{i} \left({n}_{k}-{n}_{j}\right) cos \left({α}^{i}\right)$

This linear modeling scheme follows that of the German "Flächen-Korrektur-Parameter" FKP format, which may be used to describe spatial ionospheric and tropospheric errors for RTK networks (see ref. [13]), where:

| | |
|---|---|
| ${τ}_{jk}^{i}$ | Tropospheric bias experienced between receiver j to k, to satellite i [m]; |
| ${γ}_{e}^{i} , {γ}_{n}^{i}$ | East, North tropospheric gradient parameters [meter/km]; |
| *eⱼ*, *eₖ* | East coordinates of receivers j and k, on say a local horizon frame centered at primary reference station 100 [km]; |
| *nⱼ, nₖ* | North coordinates of receivers j and k [km]; and |
| *αⁱ* | Azimuth angle of the satellite [rad]. |

The east and north gradients parameters may be estimated with data from a primary reference station 100 connected to two or more noncollinear secondary reference stations 200. The model assumes that the tropospheric errors on each satellite are linear over the extent of the reference stations. Generally this assumption holds as long as reference station spacing is sufficiently short (smaller than 1 km).

Note that, in the satellite gradient model of equation (11), the spatial distribution of tropospheric errors around the network is not fully exploited. That is, satellites with similar elevation and azimuths should produce similar east and north gradient values, yet this information is not integrated in the single-satellite gradient model described in equation (11). Thus, higher-order models may be used to consider the dependency of the differential tropospheric delay on satellite elevation angle, satellite azimuth angle, and relative station locations. However, it is anticipated that, during periods of tropospheric disturbance, the delay irregularity is relatively high and is not well digitized by sparse samples of delay across the visible sky. Moreover, small-scale tropospheric delays tend to exhibit correlation times of 30 to 60 s, which is similar to multipath, thus making it difficult to separate tropospheric and multipath errors.

With the tropospheric gradient parameters ( ${γ}_{e}^{i} , {γ}_{n}^{i}$) known for each satellite i, the corresponding tropospheric delay ( ${τ}_{jk}^{i}$) may be interpolated for the rover position (*eₖ, nₖ*) according to equation (11).

Ionospheric errors may also be described in an analogous manner to that of the tropospheric error. That is, the ionospheric error for satellite i, between receivers j and k, observed at frequency band b, may be parameterized in terms of east and north gradients: ${I}_{jk , b}^{i} = \frac{{f}_{b}^{2}}{{f}_{L 1}^{2}} \left[{μ}_{e}^{i}\left({e}_{k}-{e}_{j}\right) sin \left({α}^{i}\right)+{μ}_{n}^{i} \left({n}_{k}-{n}_{j}\right)cos\left({α}^{i}\right)\right]$ where:

| | |
|---|---|
| ${I}_{jk , b}^{i}$ | Ionospheric bias experienced between receiver j and k, to satellite i, on frequency band b [m] |
| ${μ}_{e}^{i} , {μ}_{n}^{i}$ | East and north ionospheric gradient parameters expressed at GPS L1 [meter / kilometer, i.e. meter per kilometer] |

### 4.2.4. Techniques to separate multipath and atmospheric errors

Several techniques may be used in embodiments of the invention to separate multipath and atmospheric errors when processing GNSS data collected by a reference station network. The particular characteristics of multipath, tropospheric, and ionospheric effects are highlighted below:
1. Minimized reference station spacing. The closer the reference stations are to one another, the smaller the differential tropospheric and ionospheric errors. Thus, increasing reference station density (reducing reference station spacing) limits the coverage region and/or increases the cost of installation (i.e. more GNSS reference stations are needed for a given coverage area).
   The differential tropospheric and ionospheric errors are negligible for the baseline between antennas that are less than 10 m apart. By installing GNSS receivers at closely spaced reference station locations, it is possible to exclude atmospheric errors between these stations and thus isolate multipath errors between these closely spaced reference stations. A reference station network can therefore profit from having a mix of very short (< 1 m) station spacing up to longer station spacings (> 1 km).
2. Carrier phase multipath errors vary according to the signal wavelength. Hence, multi-band GNSS carrier phase observations to a common satellite have multipath errors that are generally different. More specifically, the cyclic multipath errors of different frequency bands have different periodicities. The impact of multipath errors may therefore be reduced by averaging network residuals on multiple bands for each satellite.
3. Signal-to-noise ratio (SNR) fluctuations as an indicator of multipath. Carrier phase multipath errors tend to be accompanied by fluctuations in received SNR, whereas the troposphere is virtually transparent to L-band microwave signals and therefore does not reduce SNR. Comparison of observed and theoretical SNR values may be used to classify the incidence of multipath.
   In this context, in some embodiments, the techniques described in ref. [14] may also be used as input into the estimator. That is, in addition or as alternative to using SNR values, several other inputs may be used, such as: a carrier-to-noise ratio; code-carrier residuals; code-code residuals; a measure of distortion in a correlation function formed from a received code signal and a local replica; and also input from the user, or data from a camera and/or a three-dimensional scene model.
4. Non-dispersive tropospheric errors affect all multi-band GNSS carrier phase observations in equal amounts. Variations in atmospheric water vapor cause non-dispersive tropospheric errors. Therefore, network residuals generated from multi-band carrier phase observations experience identical non-dispersive tropospheric errors. GNSS signals that pass through dense rain clouds suffer from small frequency-dependent errors.
5. Surface meteorological sensor readings are indicators of tropospheric disturbance. Measurement of temperature, pressure, relative humidity, wind speed and rainfall intensity near the reference station network are strong indicators of when high spatial variations in tropospheric delay are likely to occur.

Fig. 17 is a schematic representation of a multi-band GNSS data processing, in one embodiment of the invention, for tropospheric model 175, ionospheric model 177, and multipath estimation 176 based on a multi-reference station network. As illustrated, input to the estimation process include multi-band carrier-phase network residuals 171 that are derived from all primary-to-secondary reference stations, and SNR values 172. Optionally, meteorological sensor data 173 may also enhance detection of tropospheric conditions that may lead to highly irregular tropospheric delay variations. Ultimately the processing method aims to quantify tropospheric and ionospheric variations as a function of spatial location. The remaining errors relate to carrier phase multipath, specific to each reference station.

The estimator component 174 of the system may take a variety of forms, including: multi-state Kalman filter; robust estimator or estimators; a neural network; or a combination of one or more of the above components. In one embodiment, a neural network is used as an estimator 174 to obtain the spatial tropospheric model 175, the spatial ionospheric model 177, and the multipath estimates 176. The neural network may be based on training data generated from various environments in which the spatial tropospheric models, the spatial ionospheric models, and the multipath estimates are precisely known by having been obtained/acquired using other methods.

### 4.2.5. Averaging multipath and atmospheric errors

The benefit of the multi-base system used in some embodiments of the invention is that multipath errors, ionospheric errors, and tropospheric errors can be averaged down to improve the overall accuracy attainable by rover GNSS equipment 300 operating with the network-corrected stream from primary reference station 100. The tropospheric errors and ionospheric errors may be separated from multipath errors as described above, but irrespective of this optional separation, the following multi-base approach is aimed to improve the accuracy of RTK rover operation.

For highest precision work, it is desirable to minimize the reference station spacing, i.e. to limit reference station spacing to e.g. 2 km. In this case, the single-differenced atmospheric errors ( ${I}_{jk , b}^{i}$ and ${τ}_{jk}^{i}$) tend to cancel and therefore the dominant error source is carrier phase multipath. In this case, the RHS of equation (9) is replaced by a network residual term which equals the combined atmospheric and multipath errors, as described in equation (6); therefore equation (9) becomes: $\left({Φ}_{jk , b}^{i}-{λ}_{b}{N}_{jk , b}^{i}-{ρ}_{jk}^{i}+{β}_{jk}-{h}_{jk , b}\right) = {Ω}_{jk , b}^{i}$

In summary, network residual terms ( ${Ω}_{jk , b}^{i}$) are estimated s40 for each carrier phase observation to each satellite, on each frequency band for each primary to secondary reference station baseline. Table 2 includes an example of network residuals generated for three baselines, for three tracked GPS satellites, observed on multiple bands.

**Table 2. Network residuals observed on three baselines (4 reference stations)**

| Baseline | GPS satellite | Band | Network residual |
|---|---|---|---|
| 1-2 | G6 | L1 | ${Ω}_{1 - 2 , L 1}^{G 6}$ |
| 1-2 | G6 | L2 | ${Ω}_{1 - 2 , L 2}^{G 6}$ |
| 1-2 | G6 | L5 | ${Ω}_{1 - 2 , L 5}^{G 6}$ |
| 1-2 | G24 | L1 | ${Ω}_{1 - 2 , L 1}^{G 24}$ |
| 1-2 | G17 | L1 | ${Ω}_{1 - 2 , L 1}^{G 17}$ |
| 1-2 | G17 | L2 | ${Ω}_{1 - 2 , L 2}^{G 17}$ |
| 1-2 | G17 | L5 | ${Ω}_{1 - 2 , L 5}^{G 17}$ |
| 1-3 | G6 | L1 | ${Ω}_{1 - 3 , L 1}^{G 6}$ |
| 1-3 | G6 | L2 | ${Ω}_{1 - 3 , L 2}^{G 6}$ |
| 1-3 | G6 | L5 | ${Ω}_{1 - 3 , L 5}^{G 6}$ |
| 1-3 | G24 | L1 | ${Ω}_{1 - 3 , L 1}^{G 24}$ |
| 1-3 | G17 | L1 | ${Ω}_{1 - 3 , L 1}^{G 17}$ |
| 1-3 | G17 | L2 | ${Ω}_{1 - 3 , L 2}^{G 17}$ |
| 1-3 | G17 | L5 | ${Ω}_{1 - 3 , L 5}^{G 17}$ |
| 1-4 | G6 | L1 | ${Ω}_{1 - 4 , L 1}^{G 6}$ |
| 1-4 | G6 | L2 | ${Ω}_{1 - 4 , L 2}^{G 6}$ |
| 1-4 | G6 | L5 | ${Ω}_{1 - 4 , L 5}^{G 6}$ |
| 1-4 | G24 | L1 | ${Ω}_{1 - 4 , L 1}^{G 24}$ |
| 1-4 | G17 | L1 | ${Ω}_{1 - 4 , L 1}^{G 17}$ |
| 1-4 | G17 | L2 | ${Ω}_{1 - 4 , L 2}^{G 17}$ |
| 1-4 | G17 | L5 | ${Ω}_{1 - 4 , L 5}^{G 17}$ |

### 4.2.6. Network residual averaging

Assuming that all reference stations 100, 200 produce multipath errors of roughly the same magnitude and error distribution, then a simple average of all baseline network residuals should effectively minimize multipath errors. For example, the averaged network residual for satellite G6, band L1, is given by: ${\overline{Ω}}_{1 - 2 , 3 , 4 , L 1}^{G 6} = \left\{{Ω}_{1 - 2 , L 1}^{G 6}+{Ω}_{1 - 3 , L 1}^{G 6}+{Ω}_{1 - 4 , L 1}^{G 6}\right\} / 4$

Note that the denominator of equation (13) is the total number of reference stations (i.e., 4), and not the number of single-differenced network residuals. The reason for this becomes apparent when single-differenced network residuals on the RHS of equation (13) are expanded out into undifferenced form as follows: ${\overline{Ω}}_{1 - 2 , 3 , 4 , L 1}^{G 6} = \left\{\left[{Ω}_{2 , L 1}^{G 6}-{Ω}_{1 , L 1}^{G 6}\right]+\left[{Ω}_{3 , L 1}^{G 6}-{Ω}_{1 , L 1}^{G 6}\right]+\left[{Ω}_{4 , L 1}^{G 6}-{Ω}_{1 , L 1}^{G 6}\right]\right\} / 4$ where: $\begin{matrix}{Ω}_{1 - 2 , L 1}^{G 6} ≡ {Ω}_{2 , L 1}^{G 6} - {Ω}_{1 , L 1}^{G 6} \\ {Ω}_{1 - 3 , L 1}^{G 6} ≡ {Ω}_{3 , L 1}^{G 6} - {Ω}_{1 , L 1}^{G 6} \\ {Ω}_{1 - 4 , L 1}^{G 6} ≡ {Ω}_{4 , L 1}^{G 6} - {Ω}_{1 , L 1}^{G 6}\end{matrix}$ The symbol = indicates that the LHS is by definition identical to the RHS.

Collecting all the undifferenced network residual terms ( ${Ω}_{1 , L 1}^{G 6}$) in equation (14): ${\overline{Ω}}_{1 - 2 , 3 , 4 , L 1}^{G 6} = \left\{{Ω}_{2 , L 1}^{G 6}+{Ω}_{3 , L 1}^{G 6}+{Ω}_{4 , L 1}^{G 6}-3 {Ω}_{1 , L 1}^{G 6}\right\} / 4$

The averaged network residuals of the form shown in equation (15) are applied as corrections to the undifferenced carrier phase observations from primary reference station 100 (see correction in operation s60a as described above). The primary reference station carrier phase data for G6, L1 has the following form: ${Φ}_{1 , L 1}^{G 6} = {ρ}_{1}^{G 6} - {β}_{1} + {h}_{1 , L 1} - {I}_{1 , L 1}^{G 6} + {τ}_{1}^{G 6} + {m}_{1 , L 1}^{G 6} + {λ}_{L 1} {N}_{1 , L 1}^{G 6}$

Grouping the ionospheric bias, tropospheric bias, and multipath errors together into a network residual term ( ${Ω}_{1 , L 1}^{G 6} = - {I}_{1 , L 1}^{G 6} + {τ}_{1}^{G 6} + {m}_{1 , L 1}^{G 6}$) leads to: ${Φ}_{1 , L 1}^{G 6} = {ρ}_{1}^{G 6} - {β}_{1} + {h}_{1 , L 1} + {Ω}_{1 , L 1}^{G 6} + {λ}_{L 1} {N}_{1 , L 1}^{G 6}$

Finally, adding the average network residual correction given in equation (15) to the primary reference station carrier phase measurement gives: ${Φ}_{1 , L 1}^{G 6} + {\overline{Ω}}_{1 - 2 , 3 , 4 , L 1}^{G 6} = {ρ}_{1}^{G 6} - {β}_{1} + {h}_{1 , L 1} + {Ω}_{1 , L 1}^{G 6} + {λ}_{L 1} {N}_{1 , L 1}^{G 6} + \left\{\begin{matrix}{Ω}_{2 , L 1}^{G 6} + {Ω}_{3 , L 1}^{G 6} + {Ω}_{4 , L 1}^{G 6} - \\ 3 . {Ω}_{1 , L 1}^{G 6}\end{matrix}\right\} / 4$

Grouping all network residual terms on the RHS of equation (18): ${Φ}_{1 , L 1}^{G 6} + {\overline{Ω}}_{1 - 2 , 3 , 4 , L 1}^{G 6} = {ρ}_{1}^{G 6} - {β}_{1} + {h}_{1 , L 1} + {λ}_{L 1} {N}_{1 , L 1}^{G 6} + \left\{{Ω}_{2 , L 1}^{G 6}+{Ω}_{3 , L 1}^{G 6}+{Ω}_{4 , L 1}^{G 6}+{Ω}_{1 , L 1}^{G 6}\right\} / 4$

It follows that all network residual terms on the RHS of equation (19), generated from the 4 reference stations 100, 200, contribute equally to the adjusted carrier phase measurement ${Φ}_{1 , L 1}^{G 6}$ for primary reference station 100. In other words, the multipath, tropospheric, and ionospheric errors experienced by all reference stations 100, 200 have been effectively averaged across the reference station network as shown below: $\begin{matrix}{Φ}_{1 , L 1}^{G 6} + {\overline{Ω}}_{1 - 2 , 3 , 4 , L 1}^{G 6} = {ρ}_{1}^{G 6} - {β}_{1} + {h}_{1 , L 1} + {λ}_{L 1} {N}_{1 , L 1}^{G 6} + \left\{-{I}_{1 , L 1}^{G 6}+{τ}_{1}^{G 6}+{m}_{1 , L 1}^{G 6}\right\} / 4 \\ + \left\{-{I}_{2 , L 1}^{G 6}+{τ}_{2}^{G 6}+{m}_{2 , L 1}^{G 6}\right\} / 4 \\ + \left\{-{I}_{3 , L 1}^{G 6}+{τ}_{3}^{G 6}+{m}_{3 , L 1}^{G 6}\right\} / 4 \\ + \left\{-{I}_{4 , L 1}^{G 6}+{τ}_{4}^{G 6}+{m}_{4 , L 1}^{G 6}\right\} / 4\end{matrix}$

The aforementioned network residual averaging operation may be applied to the case where ionospheric errors are negligible and tropospheric errors are separated into a spatial atmospheric model correction. In this case, equation (20) becomes: ${Φ}_{1 , L 1}^{G 6} + {\overline{Ω}}_{1 - 2 , 3 , 4 , L 1}^{G 6} = {ρ}_{1}^{G 6} - {β}_{1} + {h}_{1 , L 1} + {λ}_{L 1} {N}_{1 , L 1}^{G 6} + \left\{{m}_{1 , L 1}^{G 6}+{m}_{2 , L 1}^{G 6}+{m}_{3 , L 1}^{G 6}+{m}_{4 , L 1}^{G 6}\right\} / 4$

### 4.2.7. Applying reference station weighting

The network residual correction example provided above uses a simple approach for averaging atmospheric and multipath errors, that is, each reference station is treated with equal weight. In practice, multipath errors are highly dependent on the reference tracking environment, the quality of the antenna, and the receiver hardware and software. Hence, in some embodiments of the invention, it is advantageous to weight data from each reference station 100, 200 differently. Moreover, it is also possible to apply different weights to individual satellite and band network corrections from each reference station 100, 200.

Returning to the simple averaged network residual equation given in equation (13): ${\overline{Ω}}_{1 - 2 , 3 , 4 , L 1}^{G 6} = \left\{{Ω}_{1 - 2 , L 1}^{G 6}+{Ω}_{1 - 3 , L 1}^{G 6}+{Ω}_{1 - 4 , L 1}^{G 6}\right\} / 4$ and now introducing weighting factors to a generalized network residual averaging scheme: ${\overline{Ω}}_{1 - 2 , 3 , .. s , b}^{i} = {α}_{1 - 2 , b}^{i} {Ω}_{1 - 2 , b}^{i} + {α}_{1 - 3 , b}^{i} {Ω}_{1 - 3 , b}^{i} + {α}_{1 - 4 , b}^{i} {Ω}_{1 - 4 , b}^{i} … {α}_{1 - s , b}^{i} {Ω}_{1 - s , b}^{i}$ Or more succinctly: ${\overline{Ω}}_{1 - 2 , 3 , .. s , b}^{i} = {\sum }_{k = 2}^{s} {α}_{1 - k , b}^{i} {Ω}_{1 - k , b}^{i}$ where s is the total number of reference stations, including primary reference station 100 (which is assigned index 1).

Network corrections are computed in single-differenced form. However, from a weighting perspective, it is desirable to apply a separate weight for primary reference station 100 relative to all other primary-to-secondary reference station baselines. In this case, the total network correction applied to the primary reference station stream is composed of the following components (for a 4-reference-station example): ${Ω}_{1 , b}^{i} + {α}_{1 - 2 , b}^{i} ⋅ {Ω}_{1 - 2 , b}^{i} + {α}_{1 - 3 , b}^{i} ⋅ {Ω}_{1 - 3 , b}^{i} + {α}_{1 - 4 , b}^{i} ⋅ {Ω}_{1 - 4 , b}^{i}$ Expanding out the single-differenced network correction terms: ${Ω}_{1 , b}^{i} + {α}_{1 - 2 , b}^{i} ⋅ \left[{Ω}_{2 , b}^{i}-{Ω}_{1 , b}^{i}\right] + {α}_{1 - 3 , b}^{i} ⋅ \left[{Ω}_{3 , b}^{i}-{Ω}_{1 , b}^{i}\right] + {α}_{1 - 4 , b}^{i} ⋅ \left[{Ω}_{4 , b}^{i}-{Ω}_{1 , b}^{i}\right]$ leads to: $\begin{matrix}{Ω}_{1 , b}^{i} + {α}_{1 - 2 , b}^{i} ⋅ {Ω}_{2 , b}^{i} + {α}_{1 - 3 , b}^{i} ⋅ {Ω}_{3 , b}^{i} + {α}_{1 - 4 , b}^{i} ⋅ {Ω}_{4 , b}^{i} \\ - {α}_{1 - 2 , b}^{i} ⋅ {Ω}_{1 , b}^{i} - {α}_{1 - 3 , b}^{i} ⋅ {Ω}_{1 , b}^{i} - {α}_{1 - 4 , b}^{i} ⋅ {Ω}_{1 , b}^{i}\end{matrix}$ Grouping all terms involving primary reference station 100: ${Ω}_{1 , b}^{i} \left\{1-{α}_{1 - 2 , b}^{i}-{α}_{1 - 3 , b}^{i}-{α}_{1 - 4 , b}^{i}\right\} + {α}_{1 - 2 , b}^{i} ⋅ {Ω}_{2 , b}^{i} + {α}_{1 - 3 , b}^{i} ⋅ {Ω}_{3 , b}^{i} + {α}_{1 - 4 , b}^{i} ⋅ {Ω}_{4 , b}^{i}$ From equation (26), the weighting factors for the individual reference stations become apparent. In the case of primary reference station 100, the weight factor is given by: ${α}_{1 , b}^{i} = 1 - {α}_{1 - 2 , b}^{i} - {α}_{1 - 3 , b}^{i} - {α}_{1 - 4 , b}^{i}$ where ${α}_{1 , b}^{i}$ is the weight factor assigned to primary reference station 100 for satellite i, band b.

Note that the weighting factors are intentionally allocated such that they sum to one, i.e.: ${α}_{1 , b}^{i} + {α}_{1 - 2 , b}^{i} + {α}_{1 - 3 , b}^{i} + {α}_{1 - 4 , b}^{i} + … + {α}_{1 - s , b}^{i} = 1$

### 4.2.8. Assigning weights

Two approaches may be used, in some embodiments of the invention, to determine the quality of each reference station carrier phase measurements:
1. SNR of each carrier phase measurement. A theoretical model for SNR as a function of satellite elevation can be generated for each GNSS signal type for a given GNSS antenna and receiver, in an open-sky environment. Observed SNR values may then be compared with their theoretical values to determine whether signals show fluctuations that are induced by signal obstructions and/or by multipath at each reference station. Fluctuations in the SNR levels may be used to compute the variance of the corresponding carrier-phase measurements (see equation 1 of ref. [15]).
2. Studying the magnitude of single-differenced network residuals between primary reference station 100 and each secondary reference station 200.

The dispersion of single-differenced network residuals provides a precise determinant of measurement quality, including the level of multipath and atmospherics affecting the data. However, because the carrier phase data used for this evaluation is single-differenced, it is not possible to readily separate the contribution of secondary and primary reference station data to the result.

Assuming that the variance of the single-differenced network residuals for a single satellite band, on a given primary-secondary reference station baseline is given by: ${σ}^{2} \left({Ω}_{j - k , b}^{i}\right) = {σ}^{2} \left({Ω}_{j , b}^{i}\right) + {σ}^{2} \left({Ω}_{k , b}^{i}\right)$ where:
${σ}^{2} \left({Ω}_{j - k , b}^{i}\right)$ variance of the single-differenced network residual for satellite i, observed between reference stations j and k, on frequency band b;
${σ}^{2} \left({Ω}_{j , b}^{i}\right)$ variance of the undifferenced network residual for satellite i, observed at reference station j, on frequency band b; and
${σ}^{2} \left({Ω}_{k , b}^{i}\right)$ variance of the undifferenced network residual for satellite i, observed at reference station k, on frequency band b; The variance of the single-differenced network residuals can be directly estimated for all primary-to-secondary-reference baselines. Assuming that carrier phase multipath is the main driver of the undifferenced network residual variance terms ${σ}^{2} \left({Ω}_{j , b}^{i}\right)$ and ${σ}^{2} \left({Ω}_{k , b}^{i}\right)$, then the SNR-based method for estimating the carrier phase multipath can at least provide a measure of the relative magnitude of ${σ}^{2} \left({Ω}_{j , b}^{i}\right)$ to ${σ}^{2} \left({Ω}_{k , b}^{i}\right)$ Weights are inversely proportional to variance, i.e.: ${α}_{j , b}^{i} ∝ 1 / {σ}^{2} \left({Ω}_{j , b}^{i}\right)$

Therefore it is possible to combine the SNR-based technique for estimating multipath levels with the single-differenced network residual variances, to derive a relative weighting between each reference station network residual.

### 4.2.9. Assessing network installation quality

For mm-level accuracy work, it is desirable that the equipment's (rover 300) user is given a timely and faithful measure of expected precision. The inherent precision of the multi-base network correction stream can be estimated using classical least squares or Kalman filtering techniques as follows.

Three-dimension position and clock parameters are estimated for primary reference station 100 using carrier phase measurements that have been effectively shifted from all secondary reference stations 200 to primary reference station 100. In other words, each carrier phase measurement, collected at every reference station, can be considered as contributing to the estimation of the averaged primary reference station position and clock parameters at each epoch.

In order to reduce computational effort, averaged carrier phase measurements may be created for each satellite as follows: ${Φ}_{Σ}^{i} + {ε}^{i} = a x ; {σ}_{{ε}^{i}}^{2}$ where:

| | |
|---|---|
| ${Φ}_{Σ}^{i}$ | a synthetic carrier phase observation constructed as the average of all bands, observed at all reference stations 100, 200 in the network for satellite i; |
| *εⁱ* | residual term for the combined synthetic carrier phase observation ${Φ}_{Σ}^{i}$; |
| *a* | design vector, containing user-satellite direction cosines and satellite system clock coefficient terms; |
| *x* ${σ}_{{ε}^{i}}^{2}$ | vector of unknowns (position and receiver clock/hardware bias states): |
| | *x* = [ *X*, *Y*, *Z*,*κ*₁, *x*₂,... *κ_{b}*]*'*; |
| | and: |
| | *κ*₁ *= -β* + *h*_{*b=*1}; combined receiver clock and hardware bias term for band 1; |
| | *κ*₂ = *-β* + *h*_{*b=*2}; combined receiver clock and hardware bias term for band 2; |
| | ... |
| | *κ_{b} = -β* + *h_{b}*; combined receiver clock and hardware bias term for band b. |
| | variance of the synthetic carrier phase observations (the semi-colon in equation (29) being used to separate the equation on the left from the declaration of the residual variance parameter on the right). |

Generally, only the precision of the position states is of interest, therefore the values of the synthetic carrier phase observations $\left({Φ}_{Σ}^{i}\right)$ may be arbitrarily set to zero.

The variance of the synthetic carrier phase observations can be computed based on a-priori noise models, or alternatively, based on the dispersion of the estimated network residuals.

Assuming that carrier phase measurements from each reference station and each frequency band are uncorrelated, then the variance of the synthetic carrier phase observation, for a given satellite i, can be computed as follows: ${σ}_{{ε}^{i}}^{2} = 1 / \left[\left(1/{σ}_{{Φ}_{1 , 1}^{i}}^{2}\right)+\left(1/{σ}_{{Φ}_{1 , 2}^{i}}^{2}\right)+\left(1/{σ}_{{Φ}_{2 , 1}^{i}}^{2}\right)+\left(1/{σ}_{{Φ}_{2 , 2}^{i}}^{2}\right)+\left(1/{σ}_{{Φ}_{3 , 1}^{i}}^{2}\right)+\left(1/{σ}_{{Φ}_{3 , 2}^{i}}^{2}\right)\right]$ where the synthetic carrier phase observation for satellite i has been generated with 3 reference stations (j = 1, 2, 3), and 2 frequency bands (b = 1, 2).

The computation of the position and clock parameters follows a similar pattern to that used for DOP calculations. In the case of DOP calculations, all measurements are assumed to have variances identically equal to 1; whereas for the computation above, variances are assigned to each carrier phase measurement applied to the DOP calculator.

The covariance matrix of the estimated position states (Q) contains the precisions of interest, as highlighted in bold in the following equation (i.e., 9 elements in bold on the top-left corner of the matrix): $Q = \begin{matrix}{q}_{XX} & {q}_{XY} & {q}_{XZ} & {q}_{{Xκ}_{1}} & {q}_{{Xκ}_{2}} & … & {q}_{{Xκ}_{b}} \\ {q}_{XY} & {q}_{YY} & {q}_{YZ} & {q}_{{Yκ}_{1}} & {q}_{{Yκ}_{2}} & … & {q}_{{Yκ}_{b}} \\ {q}_{XZ} & {q}_{YZ} & {q}_{ZZ} & {q}_{{Zκ}_{1}} & {q}_{{Zκ}_{2}} & … & {q}_{{Zκ}_{b}} \\ {q}_{{Xκ}_{1}} & {q}_{{Yκ}_{1}} & {q}_{{Zκ}_{1}} & {q}_{{κ}_{1} {κ}_{1}} & {q}_{{κ}_{1} {κ}_{2}} & … & {q}_{{κ}_{1} {κ}_{b}} \\ {q}_{{Xκ}_{2}} & {q}_{{Yκ}_{2}} & {q}_{{Zκ}_{2}} & {q}_{{κ}_{1} {κ}_{2}} & {q}_{{κ}_{2} {κ}_{2}} & … & {q}_{{κ}_{2} {κ}_{b}} \\ … & … & … & … & … & … & … \\ {q}_{{Xκ}_{b}} & {q}_{{Yκ}_{b}} & {q}_{{Zκ}_{b}} & {q}_{{κ}_{1} {κ}_{b}} & {q}_{{κ}_{2} {κ}_{b}} & … & {q}_{{κ}_{b} {κ}_{b}}\end{matrix}$

A conservative measure for the 3D precision of the position states is given by the weighted PDOP (WPDOP) measure: $WPDOP = \sqrt{{q}_{XX} + {q}_{YY} + {q}_{ZZ}}$

As long as the variances of the carrier phase observations reflect the true distribution of carrier phase observation errors, then the WPDOP should provide a measure of the position errors that users of the network corrections can achieve.

### 4.3. Handling missing data at primary and secondary reference stations

Primary reference station 100 should preferably be selected such that it has a clear view of the sky and is able to track all possible GNSS satellites and signals. In reality, GNSS signal tracking may suffer from temporary or permanent obstruction of part of the sky. Likewise, one or more of the secondary reference stations 200 may suffer from signal obstruction, jamming, and multipath. Optimal positioning performance is achieved if primary reference station 100 and all secondary reference stations 200 track all satellite signals in view.

Secondary reference stations 200 may be regarded as playing a secondary role in network operation. If two or more secondary reference stations 200 are in use, some loss of carrier phase observations from one of the secondary reference stations 200 can occur often without significant degradation of the network-corrected stream generated by primary reference station 100. If, however, satellite signals are missing at primary reference station 100, then this:
- reduces the number of single-differenced carrier phase measurements that can be formed with all secondary reference stations 200;
- reduces the number of ambiguity-leveled carrier phase measurements that are supplied to primary reference station 100 from all secondary reference stations 200; and
- reduces the number of network-corrected carrier phase measurements that are broadcast from primary reference station 100 to the rover.

If the primary reference station signal tracking is degraded, the functionality of primary reference station 100 may, in some embodiments, be switched to one of the secondary reference stations 200 that is operating in a cleaner environment. Reconfiguration of the role of primary reference station 100 and secondary reference station(s) 200 may involve switching data link settings, data flow direction, encode/decode operations, etc. A simpler approach may effectively achieve primary/secondary switching without configuration changes, as explained in the sections below.

### 4.3.1. Transmission of raw and ambiguity-leveled secondary reference station data

As outlined above, one of the functions of the secondary reference station(s) 200 is to transmit s32b ambiguity-corrected carrier phase data back to primary reference station 100. The ambiguity-leveling process is based on the assumption that single-differenced carrier phase observations are available, i.e. the primary and secondary reference stations simultaneously track common satellite signals.

In situations where a secondary reference station 200 is tracking more satellite signals than primary reference station 100, it is still possible for the secondary reference station 200 to broadcast both raw and ambiguity-leveled carrier phase data to primary reference station 100. The data transmission protocol used to carry secondary reference station data to primary reference station 100 may flag which carrier phase observations have been ambiguity-leveled and those that have not.

### 4.3.2. Mixing network-corrected and uncorrected data

Only those carrier phase observations that have been ambiguity-leveled can be used at primary reference station 100 to generate network-corrected observations. But in situations where there are more carrier phase observations available at primary reference station 100 than there are network corrections, one of the following may be carried out:
1. Uncorrected primary reference station GNSS observations are reset and are not broadcast to the rover(s) 300; or
2. All primary reference station GNSS observations are broadcast to the rover(s) 300, irrespective of whether they are network corrected, with raw and network-corrected observations flagged accordingly, in the data transmission protocol.

If option 2 is followed, the decision on whether to mix raw and network-corrected observations can be left to the GNSS rover receiver(s) 300. Moreover, the stochastic model used to describe measurement error sources can be adjusted according to whether the carrier phase observations are network corrected or not. Raw GNSS carrier phase measurements from primary reference station 100 may suffer from larger multipath and atmospheric errors than those carrier phase measurements that have been network corrected.

There is a tradeoff between including or not including raw carrier phase observations with network-corrected observations. Including raw data may help to improve measurement geometry. However, raw data may be significantly biased by multipath and atmospheric errors. The decision to include or exclude raw observations may be guided by the prevailing measurement geometry. That is, if the measurement geometry of network-corrected observations, as assessed by the WPDOP, is significantly worse than that of the measurement geometry with all primary reference station observations, it may be preferable to include both raw and network-corrected data. On the other hand, if the measurement geometry of network-corrected observations is sufficiently strong, it may be preferable to exclude raw observations.

Based on the following definitions, the following may apply:

| | |
|---|---|
| WPDOPₙₑₜ | Describes the quality of measurement geometry for network-corrected observations at primary reference station 100 |
| WPDOPₐₗₗₗ | Describes the quality of measurement geometry for all observations at primary reference station 100 |
| WPDOPᵣₐₜᵢₒ | = WPDOPₙₑₜ/WPDOPₐₗₗ |

The logic for including or excluding raw observations may for example be summarized by the following pseudocode:

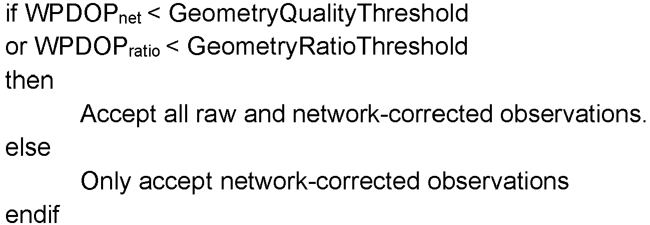

### 4.3.3. Creating artificial primary reference data

The following describes a further embodiment to handle missing data at primary reference station 100. This embodiment can also be combined with translating carrier-phase observations to a VRS location.

Given that the 3D location of each secondary reference station 200 is known with respect to primary reference station 100, it is possible to geometrically shift each GNSS carrier phase and code observation from a secondary reference station 200 to the location of an artificial primary reference station via: ${\hat{Φ}}_{j , b}^{i} = {Φ}_{k , b}^{i} - {ρ}_{jk}^{i}$ where:

| | |
|---|---|
| ${Φ}_{k , b}^{i}$ | Raw undifferenced carrier phase measurement at secondary reference station k, made to satellite i, on band b; |
| ${ρ}_{jk}^{i}$ | Single-differenced geometric range term: ${ρ}_{jk}^{i} = {ρ}_{k}^{i} - {ρ}_{j}^{i}$ |
| | in which the artificial primary reference station coordinates are known, the secondary reference station coordinates are known, and the satellite coordinates are known, hence ${ρ}_{jk}^{i}$ is known; and |
| ${\hat{Φ}}_{j , b}^{i}$ | Artificial carrier phase observation for artificial reference station j, to satellite i, on band b |

The clock bias, hardware bias, multipath, and carrier phase ambiguity for the artificial carrier phase measurement ${\hat{Φ}}_{j , b}^{i}$ differ from those values of real data collected at artificial reference station j. However, from a data processing standpoint, the artificial carrier phase observations can be processed at a rover 300 in the same way as real data.

The geometric shift scheme applied to carrier phase observations can be similarly applied to GNSS code observations.

### 5. Experimental data

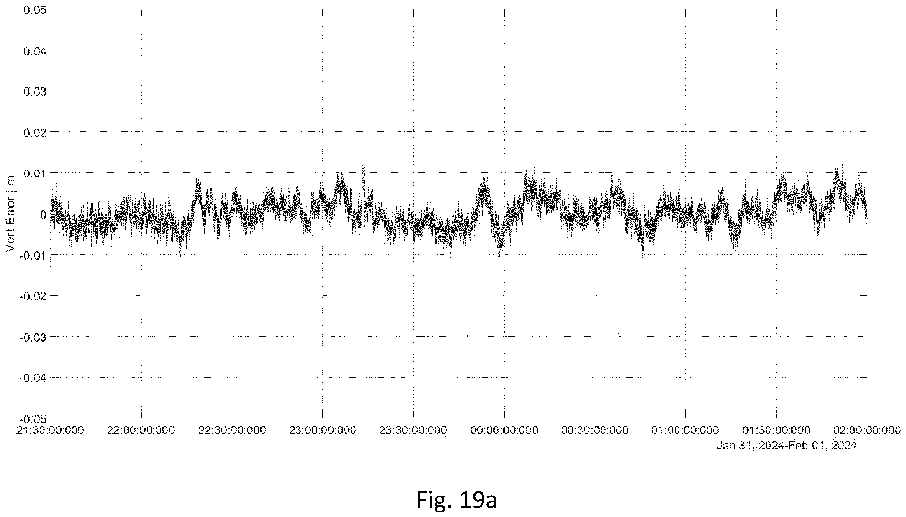

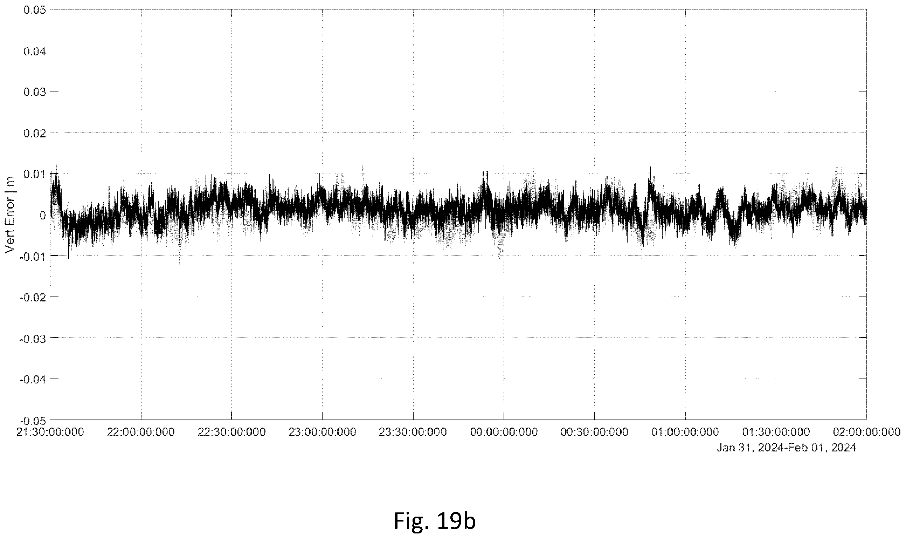

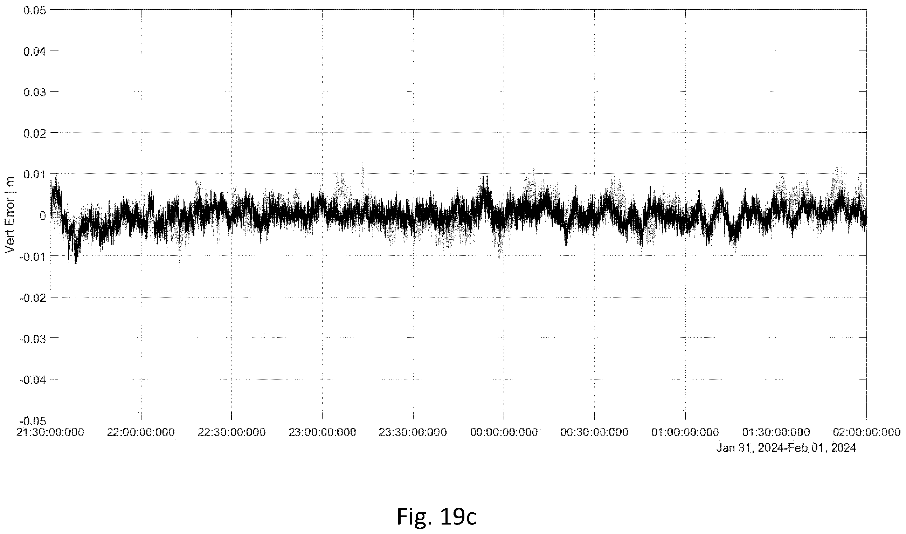

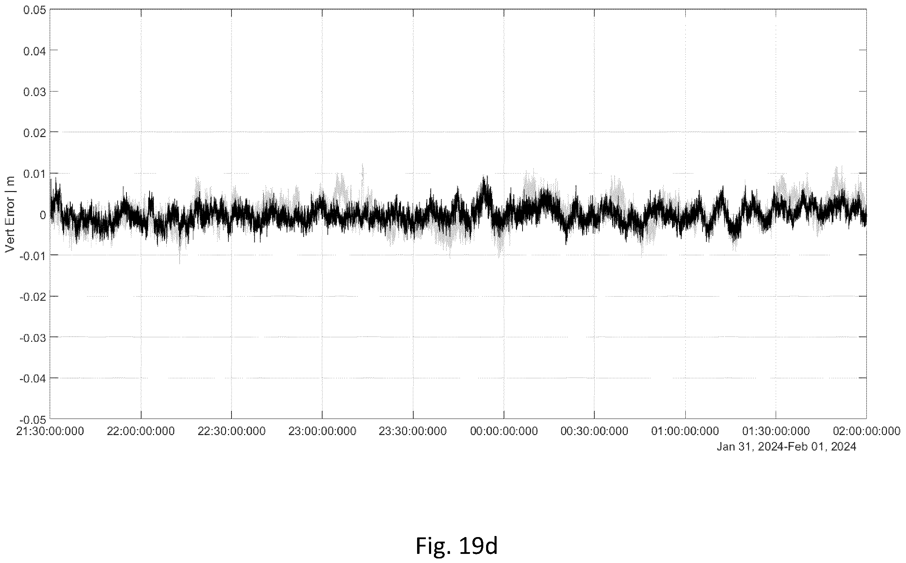

Figs. 19a to 19d show experimental data highlighting the improvements gained at a rover 300 by adding secondary reference stations 200 to the primary reference network processing. The figures show height results for different numbers of secondary reference stations. Fig. 19a shows height results with 0 secondary reference stations (i.e., uncorrected carrier-phase observations); this is what a legacy RTK rover 300 sees for height performance. Fig. 19b shows height results with 1 secondary reference station 200. Fig. 19c shows height results with 2 secondary reference stations 200. Fig. 19d shows height results with 3 secondary reference stations 200. Figs. 19a to 19d may be played one after the other to see the improvements gained when second reference stations 200 are added. The experimental data was obtained in a construction-like site in New Zealand with the following inter-reference spacing (see Table 3), the reference stations being located around the construction-like site:

**Table 3. Baselines underlying experimental data corresponding to Figs. 19a to 19d.**

| Baseline | Length (m) |
|---|---|
| Primary reference station to rover | 50 |
| Primary reference station to secondary reference station 1 | 137 |
| Primary reference station to secondary reference station 2 | 144 |
| Primary reference station to secondary reference station 3 | 70 |

The improvements in both vertical and horizontal errors can be summarized as follows (see Table 4):

**Table 4. Improvements in vertical and horizontal errors corresponding to Figs. 19a to 19d.**

| Setup | vertical error (mm) | | | horizontal error (mm) | | |
|---|---|---|---|---|---|---|
| | 68% | 95% | 99% | 68% | 95% | 99% |
| single-base RTK (i.e., uncorrected carrier-phase observations) | 3.5 | 6.7 | 8.7 | 2.6 | 4.6 | 8.3 |
| multi-base (1 secondary reference station) | 2.9 | 5.8 | 7.5 | 3.1 | 4.7 | 5.6 |
| multi-base (2 secondary reference stations) | 2.4 | 4.9 | 7.0 | 3.0 | 4.4 | 5.1 |
| multi-base (3 secondary reference stations) | 2.4 | 4.6 | 6.0 | 3.0 | 4.4 | 5.0 |

### 6. System

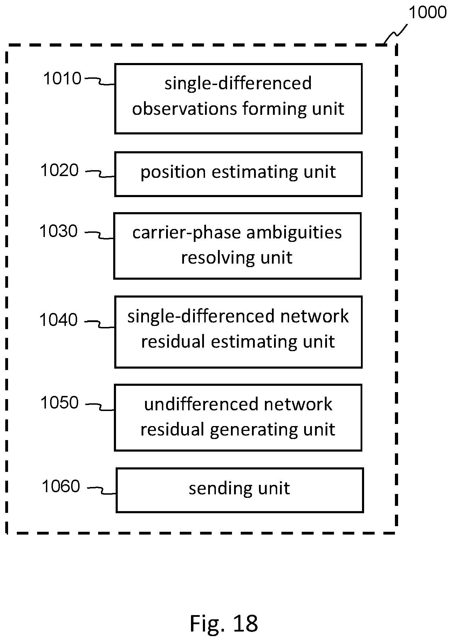

Fig. 18 schematically illustrates a system 1000 in one embodiment of the invention, for generating information as described above. System 1000 comprises one or a plurality of computers and/or servers, or more generally any number of processing entities implemented in hardware, firmware, software and/or using any form of machine-readable instructions. Part of system 1000 may also encompass a NSS receiver and/or a processing entity capable of receiving data from the NSS receiver. System 1000 comprises a single-differenced observations forming unit 1010 to perform operation s10 as described above; a position estimating unit 1020 to perform operation s20 as described above; a carrier-phase ambiguities resolving unit 1030 to perform operation s30 as described above; a single-differenced network residual estimating unit 1040 to perform operation s40 as described above; an undifferenced network residual generating unit 1050 to perform operation s50 as described above; and a sending unit 1060 to perform operation s60a and/or s60b as described above.

In one embodiment, a vehicle comprises a NSS receiver 300 as described above. The vehicle may for example be an autonomous vehicle, a self-driving vehicle, a driverless vehicle, a robotic vehicle, a highly automated vehicle, a partially automated vehicle, an aircraft, an unmanned aerial vehicle, a motor vehicle, a car, a truck, a bus, a train, a motorcycle, a tractor, an agricultural equipment, an agricultural tractor, a combine harvester, a crop sprayer, a forestry equipment, a construction equipment, and a grader. Examples of applications include machine guidance, construction work, operation of unmanned aerial vehicles (UAV), also known as drones, and operation of unmanned surface vehicles/vessels (USV).

A mobile device may also comprise a NSS receiver 300 as described above. The mobile device may be any type of communication terminal such as, for example, a mobile phone, a smartphone, a laptop, a wearable, or any other type of portable device. The mobile device may be able to use or display positions.

### 7. Additional remarks

Any of the above-described methods and their embodiments may be implemented, at least partially, by means of a computer program or a set of computer programs. The computer program(s) may be loaded on an apparatus or device, such as for example a server (which may comprise one or a plurality of computers), an NSS receiver (running on a reference station) and/or an NSS receiver chipset for mobile phones or automotive applications. Therefore, the invention also relates, in some embodiments and/or aspects, to a computer program or set of computer programs, which, when carried out on an apparatus as described above, such as for example an NSS receiver (running on a rover station, on a reference station, or within a vehicle) or a server, carries out any one of the above-described methods and their embodiments.

The invention also relates, in some embodiments, to a computer-readable medium or a computer-program product including the above-mentioned computer program. The computer-readable medium or computer-program product may for instance be a magnetic tape, an optical memory disk, a magnetic disk, a magnetooptical disk, an SSD, a CD-ROM, a DVD, a CD, a flash memory unit, or the like, wherein the computer program is permanently or temporarily stored. In some embodiments, a computer-readable medium (or to a computer-program product) has computer-executable instructions for carrying out any one of the methods of the invention.

In one embodiment, a computer program as claimed may be delivered to the field as a computer program product, for example through a firmware or software update to be installed on receivers already in the field. This applies to each of the above-described methods and systems.

NSS receivers may include one antenna or a plurality of antennas, to receive the signals at the frequencies broadcasted by the satellites, processor units, one or a plurality of accurate clocks (such as crystal oscillators), one or a plurality of central processing units (CPU), one or a plurality of memory units (RAM, ROM, flash memory, or the like), and a display for displaying position information to a user.

Where the terms "single-differenced observations forming unit", "position estimating unit", "carrier-phase ambiguities resolving unit", and the like are used herein as units (or sub-units) of an apparatus (such as an NSS receiver), no restriction is made regarding how distributed the constituent parts of a unit (or sub-unit) may be. That is, the constituent parts of a unit (or sub-unit) may be distributed in different software or hardware components or devices for bringing about the intended function. Further, the units may be gathered together for performing their functions by means of a combined, single unit (or sub-unit).

The above-mentioned units and sub-units may be implemented for example using hardware, software, firmware, any combination of hardware, software, and firmware, pre-programmed ASICs (application-specific integrated circuits), or any other form of machine-readable instructions. A unit may include a central processing unit (CPU), a storage unit, input/output (I/O) units, network connection devices, etc.

Although the present invention has been described on the basis of detailed examples, the detailed examples only serve to provide the skilled person with a better understanding and are not intended to limit the scope of the invention. The scope of the invention is defined by the appended claims.

### Abbreviations:

- 2D: two-dimensional
- 3D: three-dimensional
- BDS: BeiDou Navigation Satellite System
- C/A: coarse/acquisition (code)
- CD: compact disc
- CD-ROM: compact disk read-only memory
- CPU: central processing unit
- DOP: dilution of precision
- DVD: digital versatile disc
- GAL: Galileo satellite navigation system
- GNSS: global navigation satellite system
- GPS: Global Positioning System
- GSI: Geospatial Information Authority of Japan
- I/O: input/output
- iono: ionospheric, ionosphere
- IRNSS: Indian Regional Navigational Satellite System
- LEO-PNT: Low Earth Orbit-Positioning, Navigation and Timing
- LHS: left-hand side
- LMS: least mean squares
- MEO-PNT: Medium Earth Orbit-Positioning, Navigation, and Timing
- NAVIC: NAVigation with Indian Constellation
- NSS: navigation satellite system
- PDOP: position (3D) dilution of precision
- ppm: part(s) per million
- PPP: precise point positioning
- PRN: pseudo-random noise
- QZSS: Quasi-Zenith Satellite System
- RAM: random-access memory
- ref.: reference
- refs.: references
- RHS: right-hand side
- RNSS: regional navigation satellite system
- ROM: read-only memory
- RTCM: Radio Technical Commission for Maritime Services
- RTK: real-time kinematic
- SAPOS: Satellitenpositionierungsdienst der deutschen Landesvermessung
- SNR: signal-to-noise ratio
- SSD: solid-state disk
- UTS: Universal total station
- VRS: virtual reference station
- WPDOP: weighted position (3D) dilution of precision

### References:

[1] Hofmann-Wellenhof, B., et al., "GNSS, Global Navigation Satellite Systems, GPS, GLONASS, Galileo, & more", Springer-Verlag Wien, 2008.
[2] EP 3 035 080 A1 titled "Navigation satellite system positioning involving the generation of correction information" (Trimble ref.: A4396).
[3] Jan Van Sickle, "Two Types of Observables | GEOG 862: GPS and GNSS for Geospatial Professionals", John A. Dutton e-Education Institute, College of Earth and Mineral Sciences, The Pennsylvania State University, retrieved from https://www.e-education.psu.edu/geog862/node/1752 on November 8, 2021.
[4] EP 3 130 943 A1 titled "Navigation satellite system positioning involving the generation of tropospheric correction information" (Trimble ref.: 15072-EPO).
[5] EP 3 293 549 A1 titled "Advanced navigation satellite system positioning method and system using delayed precise information" (Trimble ref.: 16029-IDF)
[6] RTCM Special Committee. "RTCM standard 10403.3 differential GNSS (global navigation satellite systems) services-version 3." *RTCM Special Committee* 104 (2016).
[7] Trimble (June 2009). "CMRx: A new correction format from Trimble". White paper, Trimble Navigation Ltd. Retrieved on 17 May 2023 from http://trl.trimble.com/docushare/dsweb/Get/Document-469944/WhitePaper_HeavyHighway_CMRxrev1.pdf.
[8] Vollath, Ulrich, et al. "Multi-Base RTK Positioning Using Virtual Reference Stations." Proceedings of the 13th International Technical Meeting of the Satellite Division of the Institute of Navigation (ION GPS 2000). 2000.
[9] Landau, H, et.al., 2007, Network RTK Getting Ready for GNSS Modernization, GPSWorld, April, pp. 50-55.
[10] Håkegård, J E et al, 2023, Analysis of Spatial Decorrelation of Small-Scale Tropospheric Delay Using High-Resolution NWP Data, Sensors 23(3), 1237, https://doi.org/10.3390/s23031237
[11] Mishra, AK, et al, 2015, Effect of aerosol vertical distribution on aerosol-radiation interaction: A theoretical prospect, September, Heliyon 1, e00036, DOI:10.1016/j.heliyon.2015.e00036
[12] Calbet, X. et al, 2022, Horizontal small-scale variability of water vapor in the atmosphere: implications for intercomparison of data from different measuring systems, Atmospheric Measurement Techniques, 15, pp. 7105-7118, https://doi.org/10.5194/amt-15-7105-2022
[13] Wubbena, G. and Bagge, A. 2022, RTCM Message Type 59-FKP for transmission of FKP, Geo++ White Paper: https://www.geopp.de/pdf/geopp-rtcm-fkp59.pdf
[14] Co-pending European patent application 24 193 516.2 filed on August 8, 2024, and titled "A Skewed Weighting Function Approach to Code-Based GNSS Positioning" (Trimble ref.: 22044-EP)
[15] Wieser, A. and Brunner, F.K. 2000, An extended weight model for GPS phase observations. Earth Planets Space, 52, 777-782.
[16] Leick, A. et.al. 2015, "GPS Satellite Surveying", John Wiley & Sons, Print ISBN: 9781118675571, On-line ISBN: 9781119018612.

## Claims

1. Method for generating information suitable for use by at least one of
a navigation satellite system, hereinafter abbreviated as "NSS", receiver (300) and
a processing entity capable of receiving data from the NSS receiver (300)
in contributing to computing a positioning solution based on NSS signals received by the NSS receiver (300), the method involving a plurality of reference stations (100, 200) comprising:
a first reference station (100), hereinafter referred to as "primary reference station" (100), and
at least one further reference station (200), each further reference station (200) being hereinafter referred to as "secondary reference station" (200), and
the method comprising:
for each secondary reference station (200):
forming (s10) single-differenced observations based on carrier-phase observations made by the primary reference station (100) and carrier-phase observations made by the secondary reference station (200);
estimating (s20) a position of the secondary reference station (200) relative to a position of the primary reference station (100) based on the single-differenced observations;
resolving (s30) carrier-phase ambiguities based on the single-differenced observations; and
estimating (s40) a residual, hereinafter referred to as "single-differenced network residual", per carrier-phase observation to each satellite and on each frequency, for the primary reference station (100) to the secondary reference station (200) pair, based on the estimated position of the secondary reference station (200) and the resolved carrier-phase ambiguities; and
generating (s50) a residual, hereinafter referred to as "undifferenced network residual", per satellite and frequency, for accounting for errors affecting observations at the plurality of reference stations (100, 200), based on the estimated single-differenced network residuals; and
at least one of:
sending (s60a), to one or more device (300), carrier-phase observations made by the primary reference station (100), corrected using the undifferenced network residuals; and
sending (s60b), to one or more device (300), translated carrier-phase observations, the translated carrier-phase observations being based on carrier-phase observations made by the primary reference station (100), corrected using the undifferenced network residuals, and translated to a virtual reference station location.

2. Method of claim 1, wherein
generating (s50) an undifferenced network residual, per satellite and frequency, comprises generating the undifferenced network residual, per satellite and frequency, for averaging multipath errors across the plurality of reference stations (100, 200), based on the estimated single-differenced network residuals; and
the method further comprises:
generating (s52) at least one spatial atmospheric error parameter, hereinafter referred to as "spatial atmospheric error parameter set", for modelling tropospheric errors and, optionally, ionospheric errors, based on the estimated single-differenced network residuals; and
sending (s62), to one or more device, the spatial atmospheric error parameter set, wherein, optionally, the method further comprises sending (s63) information about a precision of the parameters of the spatial atmospheric error parameter set.

3. Method of claim 1 or 2, involving n secondary reference stations (200), wherein n is an integer selected within the range from 1 to 15, preferably within the range from 1 to 7, more preferably within the range from 1 to 3.

4. Method according to any one of the preceding claims, wherein each reference station (100, 200) is distant from its closest neighbour by a distance within the range from 5 cm to 4 km, preferably within the range from 10 cm to 2 km.

5. Method according to any one of the preceding claims, further comprising:
for each secondary reference station (200):
before forming (s10) the single-differenced observations based on the carrier-phase observations made by the primary reference station (100) and the carrier-phase observations made by the secondary reference station (200), transmitting (s8), from the primary reference station (100) to the secondary reference station (200), the carrier-phase observations made by the primary reference station (100);
the secondary reference station (200) being in charge of:
forming (s10) the single-differenced observations based on the carrier-phase observations made by the primary reference station (100) and the carrier-phase observations made by the secondary reference station (200);
estimating (s20) a position of the secondary reference station (200) relative to a position of the primary reference station (100), and
resolving (s30) carrier-phase ambiguities based on the single-differenced observations.

6. Method of claim 5, further comprising either element A or element B, wherein element A is or comprises:
for each secondary reference station (200):
transmitting (s32a), from the secondary reference station (200) to the primary reference station (100), the carrier-phase observations made by the secondary reference station (200), the resolved carrier-phase ambiguities, and the estimated position of the secondary reference station (200); and
wherein element B is or comprises:
for each secondary reference station (200):
transmitting (s32b), from the secondary reference station (200) to the primary reference station (100),
the carrier-phase observations made by the secondary reference station (200) and adjusted for the resolved carrier-phase ambiguities, and
the estimated position of the secondary reference station (200).

7. Method of claim 5, wherein:
for each secondary reference station (200):
the secondary reference station (200) being further in charge of:
estimating (s40) the single-differenced network residuals, per carrier-phase observation to each satellite and on each frequency, for the primary reference station (100) to the secondary reference station (200) pair, based on the estimated position of the secondary reference station (200) and the resolved carrier-phase ambiguities; and
the method further comprises:
transmitting (s42), from each secondary reference station (200) to the primary reference station (100), the single-differenced network residuals.

8. Method according to any one of the preceding claims, wherein generating (s50) the undifferenced network residuals comprises averaging across the plurality of reference stations (100, 200) by performing a weighted average.

9. Method of claim 8, wherein weights used in the weighted average depend on a measure of quality of the carrier phase observations per frequency, satellite, and reference station (100, 200).

10. Method of claim 8 or 9, wherein weights used in the weighted average depend on, or further depend on, a signal-to-noise-ratio of the carrier phase observations per frequency, satellite, and reference station (100, 200).

11. Method according to any one of claims 8 to 10, wherein weights used in the weighted average depend, or further depend on, magnitudes of the single-differenced network residuals associated with a frequency and a satellite, for each primary reference station (100) to secondary reference station (200) pair.

12. Method according to any one of claims 8 to 11, wherein weights used in the weighted average depend on, or further depend on, at least one of:
a distance between the NSS receiver (300) and each of the plurality of reference stations (100, 200); and
a distance between the primary reference station (100) and each secondary reference station (200).

13. Method according to any one of the preceding claims, further comprising: sending (s64), to the one or more device (300), for each of at least one of the plurality of reference stations (100, 200), a quality indicator representing a measure of quality of a tracking environment of the reference station (100, 200).

14. Method according to any one of the preceding claims, further comprising:
detecting (s92) that a secondary reference station (200) has been moved;
refraining (s94), for a period of time after having detected (s92) that the secondary reference station (200) has been moved, from using the secondary reference station (200) for generating undifferenced network residuals; and
estimating (s96) a position of the secondary reference station (200) that has been moved and determining that the estimated position has converged below a threshold, before using or using again the secondary reference station (200) for generating undifferenced network residuals.

15. Method of claim 14, further comprising:
sending (s98), to one or more device (300), information regarding the number of reference stations (100, 200) used for generating undifferenced network residuals.

16. Method according to any one of the preceding claims, further comprising:
transferring (s402), from one reference station to another reference station, the function of primary reference station (100).

17. Method of claim 16, wherein transferring (s402) the function of primary reference station (100) depends on at least one of:
availability of communication channels between the reference stations (100, 200);
availability of communication channels between the reference stations (100, 200) and a NSS receiver (300);
a number of satellites being tracked by the reference stations (100, 200);
a position of a NSS receiver (300) with respect to the reference stations (100, 200); and
a determination that a measure of tracking quality of the current primary reference station (100) is below a threshold.

18. Method according to any one of the preceding claims, further comprising:
determining (s65) that carrier-phase observations, hereinafter referred to as "primary reference station raw carrier-phase observations", are available at the primary reference station (100) for which no corresponding observations are available at a secondary reference station (200); and
sending (s66), to the one or more devices (300), the primary reference station raw carrier-phase observations together with an indication allowing the one or more devices to establish that the primary reference station raw carrier-phase observations are uncorrected,
wherein, if the method comprises sending (s60b), to the one or more device (300), carrier-phase observations translated to a virtual reference station location, the primary reference station raw carrier-phase observations are also translated to the virtual reference station location.

19. Method of claim 18, wherein sending (s66) the primary reference station raw carrier-phase observations together with the indication is conditional upon at least one of
determining that a measure of quality of measurement geometry of the carrier-phase observations made by the primary reference station (100) and corrected using the undifferenced network residuals is smaller than a threshold; and
determining that a ratio of a measure of quality of measurement geometry of the carrier-phase observations made by the primary reference station (100) and corrected using the undifferenced network residuals to a measure of quality of measurement geometry of all carrier-phase observations made by the primary reference station (100), whether corrected or not, is smaller than a threshold.

20. Method according to any one of the preceding claims, further comprising the following operations carried out by at least one of
a NSS receiver (300), and
a processing entity capable of receiving data from the NSS receiver (300),
for estimating parameters useful to determine a position, the NSS receiver (300) observing NSS signals from NSS satellites:
receiving (s70)
the carrier-phase observations made by the primary reference station (100) and corrected using the undifferenced network residuals, and/or
the translated carrier-phase observations, whichever is or are applicable; and
operating (s80) at least one estimation process, each estimation process being hereinafter referred to as "NSS estimator", wherein each NSS estimator uses state variables and computes values of its state variables based on at least one of:
NSS signals observed by the NSS receiver (300), and
information derived from the NSS signals,
and further based on
the received, corrected carrier-phase observations, and/or
the translated carrier-phase observations,
whichever is or are applicable.

21. Method of claim 20, further comprising
receiving (s72) at least one spatial atmospheric error parameter, hereinafter referred to as "spatial atmospheric error parameter set", for modelling tropospheric errors and, optionally, ionospheric errors; and
wherein each NSS estimator computes values of its state variables further based on the received spatial atmospheric error parameter set,
wherein, optionally, the method further comprises receiving information, hereinafter referred to as "precision information", about a precision of the parameters of the spatial atmospheric error parameter set and each NSS estimator computes values of its state variables further based on the received precision information.

22. Method of claim 20 or 21, wherein the NSS receiver (300) and/or processing entity capable of receiving data from the NSS receiver (300), whichever applies, is hereinafter referred to as "user device", and the user device is configured to be able to use the corrected carrier-phase observations, and/or the translated carrier-phase observations, whichever is or are applicable, depending on at least one of:
a digital key being available to the user device;
a software, firmware, and/or hardware option being activated on the user device; and
transmitted information, such as for example a health flag, indicating that the corrected carrier-phase observations, and/or the translated carrier-phase observations, whichever is or are applicable, are currently usable.

23. System (1000) for generating information suitable for use by at least one of
a navigation satellite system, hereinafter abbreviated as "NSS", receiver (300) and
a processing entity capable of receiving data from the NSS receiver (300)
in contributing to computing a positioning solution based on NSS signals received by the NSS receiver (300), the system (1000) comprising a plurality of reference stations (100, 200) comprising:
a first reference station (100), hereinafter referred to as "primary reference station" (100), and
at least one further reference station (200), each further reference station (200) being hereinafter referred to as "secondary reference station" (200), and
the system (1000) being configured for:
for each secondary reference station (200):
forming single-differenced observations based on carrier-phase observations made by the primary reference station (100) and carrier-phase observations made by the secondary reference station (200);
estimating a position of the secondary reference station (200) relative to a position of the primary reference station (100) based on the single-differenced observations;
resolving carrier-phase ambiguities based on the single-differenced observations; and
estimating a residual, hereinafter referred to as "single-differenced network residual", per carrier-phase observation to each satellite and on each frequency, for the primary reference station (100) to the secondary reference station (200) pair, based on the estimated position of the secondary reference station (200) and the resolved carrier-phase ambiguities; and
generating a residual, hereinafter referred to as "undifferenced network residual", per satellite and frequency, for accounting for errors affecting observations at the plurality of reference stations (100, 200), based on the estimated single-differenced network residuals; and
at least one of:
sending, to one or more device (300), carrier-phase observations made by the primary reference station (100), corrected using the undifferenced network residuals; and
sending, to one or more device (300), translated carrier-phase observations, the translated carrier-phase observations being based on carrier-phase observations made by the primary reference station (100), corrected using the undifferenced network residuals, and translated to a virtual reference station location.

24. Computer program or set of computer programs comprising computer-readable instructions configured, when executed on a computer or set of computers, to cause the computer or set of computers to carry out the method according to any one of claims 1 to 22; or computer program product or storage mediums comprising such computer program or set of computer programs.
